# EUROPÄISCHE PATENTSCHRIFT

(11) **EP 2 675 639 B1**
(45) Veröffentlichungstag und Bekanntmachung des Hinweises auf die Patenterteilung: **20.07.2016**
(21) Anmeldenummer: 12770034.2
(22) Anmeldetag: 20.09.2012
(51) Int. Cl.: B60J 10/00

(54) **PROFILELEMENT ZUM VERBINDEN EINES BAUTEILS MIT EINER FESTEN FAHRZEUGSCHEIBE**
SEALING ELEMENT FOR JOINING EN ELEMENT WITH A STATIONARY VEHICLE WINDOW PANE
JOINT D'ÉTANCHÉITÉ POUR CONNECTER UN ÉLÉMENT À UNE VITRE FIXE DE VÉHICULE

(30) Priorität: 23.12.2011 DE 102011056955
(43) Veröffentlichungstag der Anmeldung: 25.12.2013
(73) Patentinhaber: Elkamet Kunststofftechnik GmbH, 35216 Biedenkopf (DE)
(72) Erfinder: DEUSSEN, Martin, 35039 Marburg (DE); BERGMANN, Lutz, 35630 Ehringshausen (DE); PLATT, Wolfgang, 35216 Biedenkopf (DE); ORTMÜLLER, Michael, 35232 Dautphetal-Herzhausen (DE); ROTH, Hartmut, 35216 Biedenkopf (DE)
(74) Vertreter: DREISS Patentanwälte PartG mbB
(86) Internationale Anmeldenummer: PCT/EP2012/068582
(87) Internationale Veröffentlichungsnummer: WO 2013/091919

(56) Entgegenhaltungen:
- EP-A1- 1 724 141
- DE-A1-102008 050 130
- DE-A1-102009 010 015
- DE-U1-202008 006 986
- DE-U1-202008 016 217

## Beschreibung

Die Erfindung betrifft ein Profilelement zum Verbinden eines Bauteils mit einer Fahrzeugscheibe gemäß dem Oberbegriff von Anspruch 1 sowie eine Abdichtungsanordnung gemäß Anspruch 20.

Bei Kraftfahrzeugen ist es an verschiedenen Stellen notwendig, ein Bauteil mit einer Fahrzeugscheibe zu verbinden. Beispielsweise befindet sich am unteren Rand einer Frontscheibe gewöhnlich ein Wasserkasten bzw. eine Wasserkastenabdeckung, die von der Frontscheibe abfließendes Wasser auffangen und seitlich abführen soll. Zur Festlegung und Abdichtung einer solchen Wasserkastenabdeckung an der Frontscheibe verwendet man meist ein Profilelement, das randseitig mit der Fahrzeugscheibe verbunden ist und das zur lösbaren Aufnahme der Wasserkastenabdeckung eine Rastnut aufweist. Die Wasserkastenabdeckung ist mit einer Rippe versehen, die kraft- und/oder formschlüssig von der Rastnut aufgenommen wird, so dass die Abdeckung im Bedarfsfall wiederholt abgenommen und montiert werden kann.

Verschiedene Ausführungsformen solcher Profilelemente sind beispielweise in DE 199 61 706 A1, DE 200 08 555 U1, DE 20 2008 006 986 U1 oder DE 20 2008 016 217 U1 offenbar.

So zeigt beispielsweise DE 10 2008 050 130 A1 eine Profilleiste mit einer U-förmigen Rastausnehmung, in welche sich zwei gegenüberliegend angeordnete Rastelemente hakenförmig nach unten gerichtet erstrecken. Die Rastelemente sind aus einem weichelastischen Material. Beim Einstecken einer pilzkopfförmigen Leiste verformen sich die Rastelemente elastisch und hintergreifen anschließend den Pilzkopf. Die Leiste ist dann in der Rastausnehmung festgelegt.

Abweichend hierzu offenbart DE 20 2008 006 986 U1 nur ein elastisch verformbares Rastelement, welches in die Rastausnehmung hineinragt. Gegenüberliegend ist eine im Wesentlichen unelastische Rastnase angeordnet. Beim Einführen einer pilzkopfförmig ausgebildeten Leiste weicht im Wesentlichen nur das elastische Rastelement aus. In der Endstellung greifen dann die Rastnase und das elastische Rastelement hinter den Pilzkopf.

Schließlich sind mit der DE 10 2008 050 130 A1 vergleichbare Profilelemente aus der EP 1 724 141 A1 und der DE 10 2009 010 015 A1 bekannt.

Auch bei Heckscheiben können derartige ProfilelementeAnwendung finden, wenn z.B. am unteren Rand der Heckscheibe ein Wasserkasten oder ein Wasserablauf vorgesehen ist. Denkbar ist auch der Einsatz in Verbindung mit Karosserieteilen wie z.B. Türrahmen, Fensterrahmen, Zierblenden oder Abdeckungen, die mit fest eingebauten Seitenscheiben zu verbinden sind.

Die meist im Extrusionsverfahren hergestellten Profilelemente sind längliche Profilstränge mit einer Längsrichtung und einem senkrecht dazu dem jeweiligen Scheibenprofil angepassten Querschnitt. Sie müssen vor der Montage oder dem Ankleben an die Frontscheibe durch Biegen dem jeweiligen Verlauf der Scheibenkante angepasst werden. Dabei können sich die mit relativ engen Toleranzanforderungen versehenen Rastnuten so weit verformen, dass ein Fügen der Wasserkastenabdeckung nur noch schwer oder gar nicht mehr möglich ist. Die gleiche Gefahr besteht bei der Montage eines Profilelements an der Scheibe, insbesondere wenn ein U-förmiges Profilelement auf den Scheibenrand aufgepresst werden muss.

Hinzu kommt, dass jedes Profilelement gewöhnlich vor dem Einbau der Fahrzeugscheibe in das Fahrzeug mit deren unterem Rand verbunden wird und dass die Scheiben wegen ihrer Sprödigkeit in der Regel auf dem unteren Rand stehend transportiert werden. Allein aufgrund des Gewichts der Fahrzeugscheiben lassen sich daher Verformungen innerhalb der Profilelemente kaum vermeiden, so dass später beim Einrasten der Wasserkastenabdeckung in die Rastnut Probleme auftreten.

Ein weiterer Nachteil der bekannten Profilelemente besteht darin, dass diese während des Transports oder während der Lagerung der Scheiben leicht verschmutzen können, indem sich Schmutzpartikel in der Rastnut ablagern. Diese können ebenfalls das Einrasten der Wasserkastenabdeckung behindern, was immer wieder zu Verzögerungen und Problemen bei der Montage führt.

Um dem zu begegnen, verwendet man sogenannte Kederleisten, die vorübergehend mit einem Kernabschnitt in die Rastnut oder die Rastausnehmung des Profilelements eingesetzt werden. Letzteres ist dadurch während der Herstellung, der weiteren Be- oder Verarbeitung und/oder während des Transports der Fahrzeugscheiben geschützt, und die relativ empfindliche Rastnut kann weder verschmutzen noch verformt werden.

Bekannte Ausführungsformen derartiger Kederleisten sind beispielsweise aus WO 2006 002 891 A2, DE 10 2006 038 013 A1, FR 2 945 521 A1 oder US 7 870 958 B1 bekannt.

Von Nachteil hierbei ist, dass für jedes Profilelement eine separate Keder- oder Schutzleiste hergestellt, vor dem Anbringen des Profilelements an der Fahrzeugscheibe in das Profilelement eingesetzt und schließlich vor der Montage des angrenzenden Bauteils am Fahrzeug wieder entfernt werden muss. All dies verursacht zusätzlichen Logistikaufwand und zusätzliche Kosten. Die entfernten Keder- bzw. Schutzleisten müssen überdies aufwendig entsorgt werden, weil eine Wiederverwertung nicht möglich ist.

Darüber hinaus lassen sich die Kederleisten oft nur mühsam aus den Rastnuten bzw. Rastausnehmungen entfernen, weil die Profilelemente entlang der Scheibenkante gebogen sind und weil gewöhnlich ein Hinterschnitt für die Rippe der Wasserkastenabdeckung ausgebildet ist. Dadurch ist der Kernabschnitt in der Kederleiste eingerastet oder eingeklemmt und der notwendige Kraft- und Zeitaufwand zum Herausziehen der ebenfalls gebogenen Kederleiste aus dem Profilelement ist entsprechend groß. Überdies kann es bei der Entfernung der Kederleiste zu Beschädigungen am Profilelement kommen, insbesondere dann wenn ungeeignete Hilfsmittel wie Schraubendreher oder Zangen verwendet werden. Auch dadurch entstehen zusätzlicher Zeitaufwand und zusätzliche Kosten.

Ziel der Erfindung ist es, diese und weitere Nachteile des Standes der Technik zu überwinden und ein Profilelement zum Verbinden eines Bauteils mit einer Fahrzeugscheibe zu schaffen, das sowohl vor Verschmutzungen als auch vor Deformationen oder Beschädigungen geschützt ist. Es soll ferner mit einfachen Mitteln kostengünstig aufgebaut sein und eine stets zuverlässige sowie rasche Verbindung des Bauteils mit der Fahrzeugscheibe gewährleisten.

Hauptmerkmale der Erfindung sind in Anspruch 1 und in Anspruch 20 angegeben. Ausgestaltungen sind Gegenstand der Ansprüche 2 bis 19.

Bei einem Profilelement zum Verbinden eines Bauteils mit einer Fahrzeugscheibe, mit einem Profilkörper, der mit einem ersten Abschnitt an einem Rand der Fahrzeugscheibe festlegbar ist, und der in einem zweiten Abschnitt zur lösbaren Befestigung des Bauteils an dem Profilelement eine Rastausnehmung mit einer Eingriffsöffnung aufweist, die sich in Längsrichtung des Profilelements erstreckt und in der eine Rippe des Bauteils kraft- und/oder formschlüssig festlegbar ist, sieht die Erfindung vor, dass an dem Profilkörper ein Verschlusselement ausgebildet ist, das in einer ersten Funktionsstellung die Eingriffsöffnung überbrückt und die Rastausnehmung verschließt.

Die Ausbildung eines Verschlusselements an dem erfindungsgemäßen Profilkörper hat den Vorteil, dass die Rastausnehmung sowohl während der Montage des Profilelements am Rand der Fahrzeugscheibe als auch während des Transports oder der Lagerung der bereits mit einem Profilelement versehenen Fahrzeugscheiben stets zuverlässig vor dem Eindringen von Verschmutzungen geschützt ist. Wird nach der Montage der Fahrzeugscheibe im Kraftfahrzeug das Verschlusselement für das Einrasten des Bauteils geöffnet oder entfernt, kann die Rippe des Bauteils jederzeit zuverlässig in die Rastausnehmung eingreifen, weil diese nicht mehr durch Staub oder sonstigen Schmutz verstopft ist.

Ein weiterer wesentlicher Vorteil des erfindungsgemäßen Profilkörpers besteht darin, dass das Verschlusselement in seiner Schließstellung den Profilkörper und damit die Rastausnehmung insgesamt stabilisiert und stützt. Solange daher die Rastausnehmung von dem Verschlusselement verschlossen ist, kann die Rastausnehmung weder deformiert noch beschädigt werden, und dies ohne den Einsatz einer separaten Kederleiste.

Das Profilelement lässt sich damit beispielsweise ohne Probleme vor der Montage durch Biegen dem Konturverlauf der Fahrzeugscheibe anpassen. Die engen Toleranzanforderungen für die Rastausnehmung werden dabei durch das Verschlusselement stets exakt eingehalten. Auch während der Montage des Profilelements am Rand der Fahrzeugscheibe bleiben die Spaltmaße der Rastausnehmung durch das Verschlusselement über die gesamte Länge des Profilelements erhalten, selbst wenn das Profil mit höheren Kräften auf den Rand der Scheibe aufgepresst werden muss.

Unabhängig von alledem können die mit einem erfindungsgemäßen Profilelement versehenen Fahrzeugscheiben auf dem Profilelement hochkant stehend transportiert und gelagert werden. Auch hierbei schützt das die Rastausnehmung verschließende Verschlusselement den Profilkörper zuverlässig vor Deformationen oder Beschädigungen. Nachdem die Fahrzeugscheibe montiert ist, wird das Verschlusselement geöffnet und das Bauteil kann rasch und bequem montiert werden, denn die Toleranzmaße der Rastausnehmung werden über die gesamte Länge des Profils exakt eingehalten.

Separate Keder- oder Schutzleisten, die vor dem Weiterverarbeiten und/oder Montieren der Profilelemente aufwendig in diese eingebracht werden und die vor der Montage der Wasserkastenabdeckung mit viel Kraftaufwand und Mühe wieder entfernt werden müssen, sind nicht mehr erforderlich, was sich nicht nur günstig auf die Herstellkosten auswirkt. Auch die Handhabung der Profilelemente ist deutlich vereinfacht, weil ganze Montage- und Handhabungsschritte ersatzlos wegfallen. Überdies müssen die entfernten Keder- oder Schutzleisten nicht mehr aufwendig entsorgt werden, was sich ebenfalls günstig auf die Gesamtkosten auswirkt.

Mit der Festlegung des erfindungsgemäßen Profilkörpers am Rand der Fahrzeugscheibe ist es mithin jederzeit rasch und bequem möglich, ein angrenzendes Bauteil mit der Fahrzeugscheibe zu verbinden, indem die an dem Bauteil ausgebildete Rippe nach dem Öffnen des Verschlusselements in die Rastausnehmung des Profilkörpers eingesteckt wird. Die kraft- und/oder formschlüssige Verbindung gewährleistet dabei, dass das Bauteil stets zuverlässig und dicht an der Scheibe festgelegt ist und sich beispielsweise während des Betriebs des Fahrzeugs nicht mehr unbeabsichtigt von dem Profilkörper bzw. von der Scheibe lösen kann.

Fertigungstechnisch ist es günstig, wenn das Verschlusselement entlang der Längsrichtung des Profilelements mit dem Profilkörper verbunden ist. Dadurch ist es möglich, die Profilelemente im Extrusionsverfahren herzustellen, was sich ebenfalls günstig auf die Herstellkosten auswirkt. Die Längsrichtung des Profilelements entspricht in diesem Fall der Extrusionsrichtung.

Eine wichtige Ausgestaltung der Erfindung sieht vor, dass das Verschlusselement die Eingriffsöffnung der Rastausnehmung in einer ersten Funktionsstellung verschließt und in einer zweiten Funktionsstellung freigibt. In der ersten Funktionsstellung erfüllt das Verschlusselement zwei Funktionen: es schützt die Rastausnehmung vor dem Eindringen von Verunreinigungen und es schützt die Rastausnehmung in seiner Eigenschaft als Stützelement vor dem Verformen durch von außen auf den Profilkörper einwirkende Kräfte. In der zweiten Funktionsstellung hingegen kann die Rippe des Bauteils ungehindert in die Rastausnehmung eindringen und dort mit dem Profilkörper verrasten.

Mit Vorteil ist das Verschlusselement ein flächiges Element, dessen Ebene im Wesentlichen senkrecht zum Rand der Fahrzeugscheibe ausgerichtet ist. Damit kann das Verschlusselement die Rastausnehmung stets zuverlässig und dicht verschließen. Überdies liegt das Verschlusselement - wenn der Profilkörper an der Fahrzeugscheibe montiert ist - mit seiner Ebene etwa in der Ebene der Fahrzeugscheibe, so dass Kräfte die parallel zur Fahrzeugscheibe auf das Profilelement einwirken, stets zuverlässig von dem Verschlusselement aufgenommen werden. Dieses bildet in seiner ersten Funktionsstellung mithin zugleich ein Stützelement, welches die Rastausnehmung vorübergehend stabilisiert. Drängt man hingegen senkrecht zur Ebene des Verschlusselements in die Rastausnehmung ein - sei es mittels eines Werkzeugs oder mit der Rippe des Bauteils - dann wird das Verschlusselement zur Seite gedrängt. Es gelangt von der ersten Funktionsstellung in die zweite Funktionsstellung, und die Rippe kann zuverlässig in der Rastausnehmung festgelegt werden.

Damit das Verschlusselement jederzeit rasch und zuverlässig geöffnet und von der ersten in die zweite Funktionsstellung gebracht werden kann, sieht die Erfindung weiter vor, dass zwischen dem Profilkörper und dem Verschlusselement ein Scharnierbereich ausgebildet ist. Dieser kann durch eine Materialverjüngung gebildet sein, beispielsweise in der Art eines Filmscharniers. Möglich ist aber auch die Verwendung eines Übergangsbereichs zwischen dem Profilkörper und dem Verschlusselement, der aus einem anderen, bei Bedarf weicheren oder elastischeren Material besteht. Werden unterschiedliche Materialien im Profilkörper eingesetzt, so kann dieser vorteilhaft im Koextrusionsverfahren hergestellt werden.

Zweckmäßig ist das Verschlusselement einstückig mit dem Profilkörper oder es ist stoffschlüssig mit dem Profilkörper verbunden. Damit muss stets nur ein Element gefertigt werden, was sich äußerst günstig auf die Herstellkosten und die Logistik auswirkt. Insbesondere ist das aufwendige Entfernen und Entsorgen von separaten Kederleisten nicht mehr erforderlich.

Je nachdem, welche Anforderungen das Profilelement in Bezug auf die auf den Profilkörper einwirkenden Kräfte erfüllen müssen, können der Profilkörper und das Verschlusselement entweder aus dem gleichen Material gefertigt werden oder man verwendet unterschiedliche Materialien. So kann z.B. der Profilkörper aus einem härteren Material bestehen, während das Verschlusselement aus einem weicheren Material gefertigt wird oder umgekehrt. Wichtig ist stets, dass das Verschlusselement in der ersten Funktionsstellung eine ausreichende Stützwirkung für den Profilkörper bzw. für die Rastausnehmung aufweist und beim Öffnen und/oder beim Einbringen der Rippe des Bauteils in die Rastausnehmung zuverlässig in die zweite Funktionsstellung gelangt.

Dabei ist es von Vorteil, wenn gemäß einer wichtigen Ausgestaltung der Erfindung ein einziges Verschlusselement vorgesehen ist, das entlang der Längsrichtung des Profilelements auf einer ersten Seite der Rastausnehmung an den Profilkörper angelenkt ist. Auf der der ersten Seite gegenüber liegenden zweiten Seite der Rastausnehmung steht das Verschlusselement entlang der Längsrichtung des Profilelements in der ersten Funktionsstellung kraft- und/oder formschlüssig mit dem Profilkörper in Eingriff. Durch diese stabile, aber dennoch lösbare Verbindung bleibt das Verschlusselement während dem Biegen oder dem Montieren des Profilelements, aber auch während des Transports der Fahrzeugscheiben, stets zuverlässig geschlossen.

Sobald das Profilelement und die Fahrzeugscheibe fest montiert sind, ist es jederzeit möglich, die Rastausnehmung zu öffnen, indem die kraft- und/oder formschlüssige Verbindung zwischen dem Verschlusselement und dem Profilkörper gelöst und das Verschlusselement von der ersten Funktionsstellung in die zweite Funktionsstellung gebracht wird. Dies kann mit einem separaten Werkzeug erfolgen. Man kann das Öffnen des Verschlusselements aber auch mit der Rippe des Bauteils vornehmen, indem die Rippe auf das Verschlusselement aufgesetzt und letzteres durch Eindrücken der Rippe nach innen in die Rastausnehmung verdrängt wird, bis das Verschlusselement seine zweite Funktionsstellung erreicht und die Rippe in der Rastausnehmung kraft- und/oder formschlüssig festgelegt ist.

Eine Variante dieser Ausführungsform sieht vor, dass das Verschlusselement entlang der Längsrichtung des Profilelements auf der der ersten Seite gegenüber liegenden zweiten Seite der Rastausnehmung in der ersten Funktionsstellung über einen verjüngt ausgebildeten Bereich mit dem Profilkörper verbunden ist. Dieser verjüngt ausgebildete Bereich wird derart dimensioniert, dass eine Art Sollbruchstelle entsteht. Diese hält zunächst das Verschlusselement in seiner Verschluss- und Stützposition (erste Funktionsstellung). Sobald die Verbindung zwischen dem Verschlusselement und dem Profilkörper aufgetrennt oder aufgebrochen wird, gelangt das Verschlusselement in die zweite Funktionsstellung und die Rippe der Wasserkastenabdeckung kann in der Rastausnehmung festgelegt werden.

In einer anderen Ausgestaltung der Erfindung sind zwei Verschlusselemente vorgesehen, wobei entlang der Längsrichtung des Profilelements ein erstes Verschlusselement auf einer ersten Seite der Rastausnehmung und ein zweites Verschlusselement auf der der ersten Seite gegenüber liegenden zweiten Seite der Rastausnehmung an den Profilkörper angelenkt ist. Das Verschlusselement ist mithin insgesamt zweigeteilt und öffnet zu beiden Seiten der Extrusions- bzw. Längsrichtung des Profilelements.

Um die Verschlusselemente in der ersten Funktionsstellung zu arretieren bzw. zu halten, stehen diese kraft- und/oder formschlüssig miteinander in Eingriff. Die Verschlusselement können aber auch in einer Variante dieser Ausführungsform über einen verjüngt ausgebildeten Bereich, vorzugsweise eine Sollbruchstelle, miteinander verbunden sein.

Sobald das Profilelement und die Fahrzeugscheibe fest montiert sind, ist es auch hier jederzeit möglich, die Rastausnehmung zu öffnen, indem die kraft- und/oder formschlüssige Verbindung zwischen den Verschlusselementen gelöst und die Verschlusselemente von der ersten Funktionsstellung in die zweite Funktionsstellung gebracht werden. Dies kann mit einem separaten Werkzeug erfolgen. Man kann das Öffnen der Verschlusselemente aber auch mit der Rippe des Bauteils vornehmen, indem die Rippe auf die Verbindung zwischen den Verschlusselementen aufgesetzt und letztere durch Eindrücken der Rippe nach innen in die Rastausnehmung verdrängt werden, bis jedes Verschlusselement seine zweite Funktionsstellung erreicht und die Rippe in der Rastausnehmung kraft- und/oder formschlüssig festgelegt ist.

Eine noch andere wichtige Ausbildung der Erfindung sieht vor, dass wenigstens ein Verschlusselement in der zweiten Funktionsstellung innerhalb der Rastausnehmung arretierbar ist. Dadurch können gegebenenfalls in den Scharnier- oder Anlenkbereichen auf die Verschlusselemente einwirkende Rückstellkräfte wirksam und dauerhaft kompensiert werden.

Man kann das oder die Verschlusselemente aber auch zum Festlegen der Rippe des Bauteils in der Rastausnehmung einsetzen, indem das Verschlusselement derart ausgebildet ist, dass es in der zweiten Funktionsstellung ein Rastelement für die Rippe des Bauteils aufweist oder bildet. Dadurch lässt sich beispielsweise die Stabilität der Verbindung zwischen dem Bauteil und der Fahrzeugscheibe weiter erhöhen.

Hierbei ist es möglich, dass das Verschlusselement selbst als Rastelement fungiert und mit der Rippe des Bauteils kraft- und/oder formschlüssig ein Eingriff gelangt. Ergänzend oder alternativ kann das Verschlusselement aber auch wenigstens ein Rastelement aufweisen oder tragen, das in der zweiten Funktionsstellung kraft- und/oder formschlüssig mit der Rippe des Bauteils in Eingriff gelangt.

Eine weitere Variante der Erfindung sieht vor, dass ein Rastelement für die Rippe des Bauteils innerhalb der Rastausnehmung ausgebildet ist. Die kann ein separates oder zusätzliches Rastelement sein. Das separate oder zusätzliche Rastelement kann aber auch mit dem an dem Verschlusselement vorgesehenen Rastelement identisch sein.

Gemäß einer vorteilhaften Ausführungsform der Erfindung bilden das Rastelement des Verschlusselements und/oder das innerhalb der Rastausnehmung ausgebildete Rastelement in Bezug auf die Rippe des Bauteils einen Widerhaken. Dadurch ist es möglich, das Bauteil stets rasch und bequem zu montieren, denn dessen Rippe lässt sich mit relativ geringerem Widerstand bzw. Kraftaufwand in die Rastausnehmung einfügen. Auf das Profilelement und dessen Verbindung mit der Fahrzeugscheibe wirken daher deutlich geringere Kräfte ein, so dass sich das Profil nicht mehr ungewollt von der Scheibe lösen kann, selbst nach wiederholtem Aus- und Einbau des Bauteils. Auch eine aufwendige Abstützung des Profilelements gegenüber der Karosserie ist nicht mehr notwendig, was sich günstig auf die Herstell- und Montagekosten auswirkt. Mithin können keine störenden Geräusche mehr auftreten, wenn sich die Abstützung des Profilelements und die Karosserie relativ zueinander bewegen.

Eine noch andere Weiterbildung des erfindungsgemäßen Profilelements sieht vor, dass das Verschlusselement entlang der Längsrichtung des Profilelements über verjüngt ausgebildete Bereiche mit dem Profilkörper verbunden ist. Hier werden nun keine Scharniere oder Gelenke mehr verwendet, um das bzw. die Verschlusselemente von der ersten Funktionsstellung in die zweite Funktionsstellung zu verschwenken. Die verjüngt ausgebildeten Bereiche bilden vielmehr Sollbruchstellen, die beim Einführen der Rippe des Bauteils in die Rastausnehmung aufbrechen und so das Verrasten der Rippe mit dem Profilkörper ermöglichen.

Um zwischen dem Bauteil und der Fahrzeugscheibe einen flächenbündigen Übergang ausbilden zu können, ist der erste Abschnitt des Profilelements L-förmig ausgebildet, wobei der erste Abschnitt des Profilkörpers einen Profilschenkel aufweist, der mit dem unteren Rand der Fahrzeugscheibe verklebt wird, beispielsweise mittels einer Haftschicht oder einer Kleberaupe. Das Profilelement wird bei dieser Ausführungsform mit dem Profilschenkel auf die Unterseite der Fahrzeugscheibe geklebt, wobei es aufgrund der L-Form nicht über die Oberfläche der Fahrzeugscheibe hinausragt.

Je nach Anwendungsfall oder Kundenwunsch kann es zweckmäßig sein, den ersten Abschnitt des Profilelements U-förmig auszubilden. Dieser wird dann auf die Fahrzeugscheibe aufgesteckt, wobei der Profilkörper mit seinen Schenkeln den Randbereich der Fahrzeugscheibe übergreift.

Um den Übergang von der Fahrzeugscheibe zum Bauteil zuverlässig abzudichten, sieht die Erfindung weiter vor, dass der Profilkörper eine Dichtlippe aufweist oder trägt. Diese kann innerhalb des U-förmigen Profilelements liegen, als Fortsatz an einem Schenkeln des U-Profils ausgebildet sein oder - bei der Verwendung eines Profilelements mit im Querschnitt L-förmigem ersten Abschnitt - derart ausgebildet sein, dass zwischen der Fahrzeugscheibe und dem Bauteil ein glatter und flächenbündiger Übergang entsteht.

In dem Profilkörper und/oder in dem Verschlusselement ist in einer weiteren Ausführungsform der Erfindung zumindest abschnittsweise mindestens eine Versteifungs-Einlage vorgesehen. Dadurch können die Materialeigenschaften für das Profilelement individuell variiert werden. Dabei ist es möglich, die Versteifungs-Einlage, beispielsweise eine Metalleinlage als Scharnier zwischen dem Profilkörper und dem Verschlusselement zu verwenden. Insbesondere im Scharnierbereich können auch Einlagen aus Faservliesen, Geweben oder dergleichen vorgesehen werden, die dem Verschlusselement eine besonders gute Beweglichkeit von der ersten in die zweite Funktionsstellung geben.

Mit dem erfindungsgemäßen Profilelement ist es möglich, eine Abdichtungsanordnung für den Übergang zwischen einer Fahrzeugscheibe und einem Bauteil zu schaffen, insbesondere für den unteren Bereich einer Kraftfahrzeug-Windschutzscheibe, die gänzlich auf separate Keder- oder Stützleisten verzichtet. Dennoch ist das Profilelement im Bereich der meist empfindlichen Rastausnehmung zuverlässig gegen das Eindringen von Verschmutzungen sowie gegen Beschädigungen geschützt, denn durch das an dem Profilkörper ausgebildete Verschlusselement entsteht im Bereich der Rastausnehmung eine Art Hohlkammerprofil, dass selbst größeren Kräften problemlos Stand hält. Wird hingegen das Verschlusselement geöffnet, indem es von seiner ersten Funktionsstellung in eine zweite Funktionsstellung gebracht wird, kann das anzubringende Bauteil mit seiner Rippe rasch und zuverlässig mit dem Profilelement verrastet werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine Draufsicht auf eine Fahrzeugscheibe, die an ihrem unteren Rand ein erfindungsgemäßes Profilelement trägt, das zum Verbinden eines Bauteils mit der Fahrzeugscheibe vorgesehen ist;
- Fig. 2: eine Schnittansicht eines an einer Fahrzeugscheibe montierten erfindungsgemäßen Profilelements mit einem Verschlusselement;
- Fig. 3: das Profilelement von Fig. 2 mit montiertem Bauteil;
- Fig. 4: das Profilelement von Fig. 2 unmittelbar nach dem Extrudieren, wobei das Verschlusselement relativ zur Rastausnehmung nach außen geöffnet ist;
- Fig. 5: eine Schnittansicht einer anderen Ausführungsform eines erfindungsgemäßen Profilelements, das mit einer Verstärkungseinlage versehen ist;
- Fig. 6: eine Schnittansicht einer weiteren Ausführungsform eines erfindungsgemäßen Profilelements mit einem zweigeteilten Verschlusselement;
- Fig. 7: das Profilelement von Fig. 6 mit montiertem Bauteil, wobei von dem Bauteil nur die Rippe dargestellt ist;
- Fig. 8: eine Schnittansicht einer weiteren Ausführungsform eines erfindungsgemäßen Profilelements mit einem Verschlusselement und einem in der Rastausnehmung ausgebildeten Rastelement;
- Fig. 9: eine Schnittansicht einer weiteren Ausführungsform eines erfindungsgemäßen Profilelements mit einem Verschlusselement, wobei an dem Verschlusselement ein Rastelement ausgebildet ist;
- Fig. 10: das an der Fahrzeugscheibe befestigte Profilelement von Fig. 9 mit montiertem Bauteil;
- Fig. 11: eine Schnittansicht einer noch anderen Ausführungsform eines erfindungsgemäßen Profilelements mit einer U-förmigen Anbindung an die Fahrzeugscheibe und einem Verschlusselement, wobei in der Rastausnehmung ein Rastelement angeordnet ist;
- Fig. 12: das an der Fahrzeugscheibe befestigte Profilelement von Fig. 11 mit montiertem Bauteil;
- Fig. 13: eine Schnittansicht einer weiteren Ausführungsform eines an einer Fahrzeugscheibe montierten erfindungsgemäßen Profilelements mit einem Verschlusselement und einer in der Rastausnehmung ausgebildeten Rastvorrichtung für das Verschlusselement;
- Fig. 14: das Profilelement von Fig. 13 mit montiertem Bauteil und dem Verschlusselement, das im Inneren der Rastausnehmung an der Rastvorrichtung festgelegt ist;
- Fig. 15: eine Schnittansicht einer weiteren Ausführungsform eines an einer Fahrzeugscheibe montierten erfindungsgemäßen Profilelements mit einem Verschlusselement, das über einen freiliegenden Abschnitt einer Verstärkungseinlage an den Profilkörper angelenkt ist;
- Fig. 16: eine Schnittansicht einer weiteren Ausführungsform eines an einer Fahrzeugscheibe montierten erfindungsgemäßen Profilelements mit einem Verschlusselement, wobei der Profilkörper des Profilelements und das Verschlusselement aus unterschiedlichen Materialien gefertigt sind;
- Fig. 17: eine Schnittansicht einer weiteren Ausführungsform eines erfindungsgemäßen Profilelements mit einem Verschlusselement, das über verjüngt ausgebildete Abschnitte mit dem Profilkörper des Profilelements verbunden ist; und
- Fig. 18: eine Schnittansicht einer anderen Ausführungsform eines erfindungsgemäßen Profilelements mit einem Verschlusselement, das über verjüngt ausgebildete Abschnitt mit dem Profilkörper des Profilelements verbunden ist..

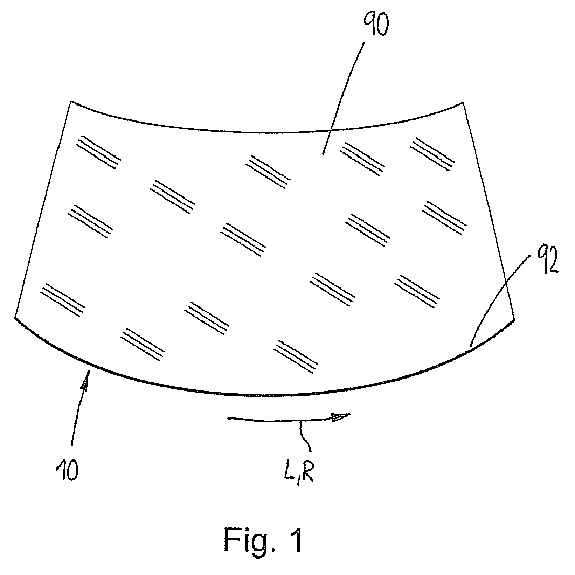

Fig. 1 zeigt eine Fahrzeugscheibe 90, insbesondere eine Windschutzschreibe für ein (nicht dargestelltes) Kraftfahrzeug. Am unteren Rand 92 der Windschutzscheibe 90 ist ein allgemein mit 10 bezeichnetes Profilelement montiert. Dieses dient zur Verbindung eines (hier nicht gezeigten) Bauteils 80 mit der Fahrzeugscheibe 90. Letztere wird in der Regel mit dem Profilelement vormontiert geliefert und fest in die Karosserie des Kraftfahrzeugs eingebaut, vorzugsweise eingeklebt. Bei dem Bauteil 80 kann es sich beispielsweise um eine Wasserkastenabdeckung handeln, die mit einer (hier ebenfalls nicht sichtbaren) Rippe 82 in dem Profilelement 10 derart verrastet wird, dass eine dichte und stabile Verbindung entsteht, die im Bedarfsfall auch wieder gelöst werden kann.

Über das Profilelement 10 können auch andere Bauteile 80 mit der Fahrzeugscheibe 90 verbunden werden, beispielsweise ein anderes Karosserieteil, wie z.B. ein Türrahmen, ein Fensterrahmen, eine Zierblende oder eine Abdeckung, die jeweils mit einer fest eingebauten Fahrzeugscheibe zu verbinden sind. Die Fahrzeugscheibe selbst kann eine Frontscheibe, aber auch eine Dach-, Heck- oder Seitenscheibe sein.

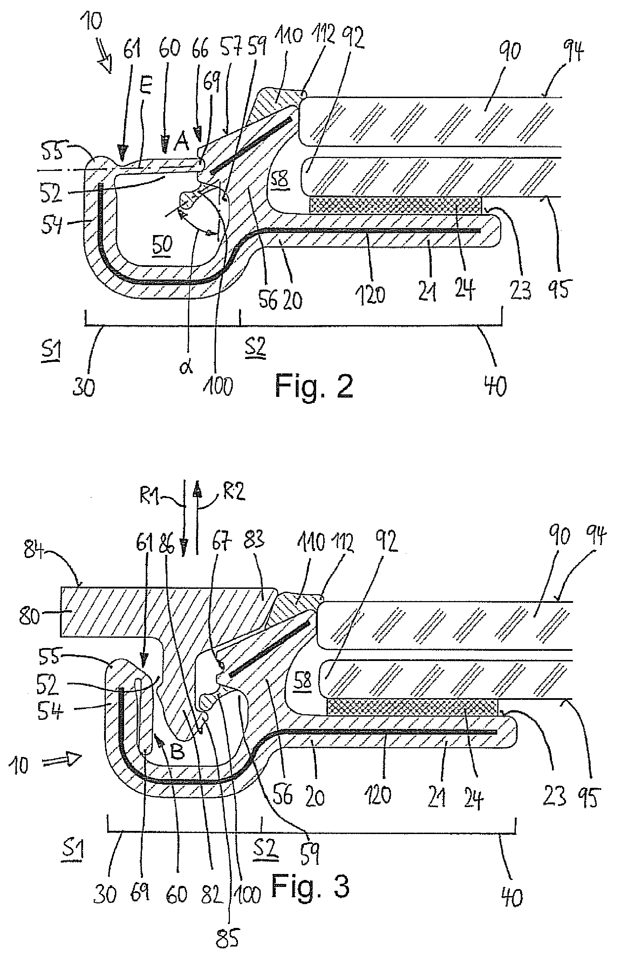

Ein erstes Ausführungsbeispiel für ein erfindungsgemäßes Profilelement ist in Fig. 2 dargestellt. Dieses ist dient der Verbindung einer Windschutzscheibe 90 aus Verbundglas mit einer Wasserkastenabdeckung 80, die gewöhnlich aus Kunststoff gefertigt ist. Die Wasserkastenabdeckung 80 schließt mit einer Oberkante 83 an den meist gebogenen unteren Rand 92 der Windschutzscheibe 90 an und führt von dieser abfließendes Wasser nach außen ab. Die Außenfläche 84 des Wasserkastens 80 liegt - wie in Fig. 3 gezeigt - im Wesentlichen fluchtend zur Außenfläche 94 der Windschutzscheibe 90.

Das Profilelement 10 ist bevorzugt ein Strangpressprofil, das im Extrusionsverfahren hergestellt wird. Der dabei entstehende Profilstrang erstreckt sich in Extrusionsrichtung R, die identisch ist mit der Längsrichtung L des Profilelements 10. Quer zur Längsrichtung L besitzt das Profilelement 10 einen Querschnitt, der an die jeweiligen Bedürfnisse der Einbausituation angepasst ist, beispielsweise in Abhängigkeit von den Abmessungen und Geometrien der Wasserkastenabdeckung 80 und/oder der Windschutzscheibe 90.

Jedes Profilelement 10 wird auf die Breite der Windschutzscheibe 90 bzw. auf die Breite der Wasserkastenabdeckung 80 zugeschnitten und rückseitig, d.h. dem Fahrzeuginnenraum zugewandt, an der Scheibe 90 verklebt. Es besteht aus einem oder mehreren Kunststoffen (Thermoplaste oder Duroplaste) jeweils geeigneter Härte, beispielsweise Polypropylen (PP), Polyvinylchlorid (PVC), Acrylnitril-Butadien-Styrol-Copolymeren (ABS) o.dgl. und/oder aus Kombinationen davon. Verwendbar sind aber auch Elastomere bzw. Gummiwerkstoffe wie z.B. EPDM.

Ein erster Abschnitt 40 des Profilelements 10 ist insgesamt etwa L-förmig ausgebildet. Er hat zur Festlegung an der Fahrzeugscheibe 90 einen Profilschenkel 21 mit einer im Wesentlichen ebenen Fläche 23. Auf dieser ist eine Haftschicht 24 in Form eines doppelseitigen Klebebandes aufgebracht, das beispielsweise hitzeaktivierbar sein kann. Der Profilschenkel 21 wird mit dem Klebeband 24 entlang des Scheibenrandes 92 auf der Rückseite 95 der Fahrzeugscheibe 90 angepresst und mit dieser verklebt. Man kann den Profilschenkel 21 ergänzend oder alternativ auch mit einer Kleberaupe an der Scheibe 90 ankleben. Eine solche (nicht dargestellte) Kleberaupe kann den Profilschenkel 21 auch teilweise übergreifen.

Das Profilelement 10 hat ferner einen zweiten Abschnitt 30, der zur lösbaren Befestigung der Wasserkastenabdeckung 80 eine Rastausnehmung 50 aufweist, die sich in Längsrichtung L des Profilelements 10 erstreckt, wobei die Wasserkastenabdeckung 80 mit einer sich ebenfalls in Längsrichtung L des Profilelements 10 erstreckenden Rippe 82 versehen ist, die kraft- und/oder formschlüssig in der Rastausnehmung 50 festlegbar ist. Man erkennt in Fig. 3, dass sich die Rippe 82 in montierter Stellung der Wasserkastenabdeckung 80 in einer Richtung R1 erstreckt, die etwa senkrecht zur Längsrichtung L sowie senkrecht zur Außenfläche 84 der Wasserkastenabdeckung 80 bzw. zur Außenfläche 94 der Frontscheibe 90 verläuft. Die Anordnung von Fahrzeugscheibe 90, Profilelement 10 und Wasserkastenabdeckung 80 ist ferner so getroffen, dass die gewöhnlich federelastische Rippe 82 der Wasserkastenabdeckung 80 in Richtung R1 in die Rastausnehmung 50 des Profilelements 10 einführbar und in entgegengesetzter Richtung R2 mit erhöhter Kraft wieder aus dem Profilelement 10 lösbar ist.

Die Rastausnehmung 50 wird von einem im Wesentlichen L-, U- oder hakenförmigen Federschenkel 54 sowie einer Tragrippe 56 begrenzt, die im Übergang zwischen dem ersten Abschnitt 40 und dem zweiten Abschnitt 30 des Profilelements 10 ausgebildet ist. Das freie Ende 55 des Federschenkels 54 und die Tragrippe 56 bilden dabei eine Eingriffsöffnung 52 für die Rippe 82 der Wasserkastenabdeckung 80. In der Darstellung der Fig. 2 und 3 liegt dabei der Federschenkel 54 entlang der Längsrichtung L des Profilelements 10 mit seinem freien Ende 55 auf einer ersten Seite S1 der Rastausnehmung 50, während sich die Tragrippe 56 entlang der Längsrichtung L des Profilelements 10 auf einer zweiten Seite S2 befindet, die sich - bezogen auf die Eingriffsöffnung 52 - gegenüber der ersten Seite S1 der Rastausnehmung 50 befindet.

Die Tragrippe 56 bildet zwischen dem unteren Rand 92 der Scheibe 90 und der nach innen vorspringenden Rippe 82 der Wasserkastenabdeckung 80 einen Klemm- bzw. Stützkörper, der auf einer Fläche 57 ein Dichtelement 110 trägt. Letzteres ist bevorzugt aus einem weichelastischen Material gefertigt, beispielsweise einem thermoplastischem Elastomer (TPE), einem Moosgummi oder einem anderen geeigneten Material wie z.B. einem Elastomer oder Gummiwerkstoff. Es liegt mit einer Nasenkante 112 dichtend am unteren Rand 92 der Fahrzeugscheibe 90 an und wird - nach der Montage der Wasserkastenabdeckung 80 - zwischen dem unteren Rand 92 der Scheibe 90 und der Oberkante 83 der Wasserkastenabdeckung 80 derart verpresst, dass die (nicht näher bezeichnete) Außenfläche des Dichtelements 110 bündig mit der Außenfläche 94 der Scheibe 90 und der Außenfläche 84 der Wasserkastenabdeckung 80 abschließt. Es entsteht mithin ein im Wesentlichen glatter und flächenbündiger Übergang zwischen der Fahrzeugscheibe 90 und dem Wasserkasten 80.

Das Dichtelement 110 ist bevorzugt stoffschlüssig mit der Tragrippe 56 verbunden. Es kann aber auch einstückig mit diesem ausgebildet sein.

Die Tragrippe 56 und der Profilschenkel 21 bilden im Wesentlichen den L-förmigen Querschnitt des ersten Abschnitts 40 des Profilelements 10, wobei im Bereich des Scheibenrandes 92 eine Höhlung 58 ausgebildet ist. Dadurch kann sich die in montierter Position gegen die Scheibe 90 abstützende Tragrippe 56 elastisch nachgeben. Dadurch wiederum ist nicht nur eine dauerhaft gute und zuverlässige Abdichtung gewährleistet. Die Tragrippe 56 und die Dichtlippe 110 können auch Toleranzen zwischen der Scheibe 90 und der Wasserkastenabdeckung 80 ausgleichen.

Der Federschenkel 54 trägt an seinem freien Ende 55 ein sich entlang der Längsrichtung L des Profilelements 10 erstreckendes Verschlusselement 60, das einstückig an dem Profilkörper 20 ausgebildet ist und das in der in Fig. 2 mit A bezeichneten Funktionsstellung die Rastausnehmung 50 bzw. deren Eingriffsöffnung 52 verschließt.

Zwischen dem Federschenkel 54 des Profilkörpers 20 und dem Verschlusselement 60 ist auf der ersten Seite S1 der Rastausnehmung 50 ein Scharnierbereich 61 ausgebildet. Hierbei handelt es sich beispielsweise - wie in den Fig. 2 und 3 dargestellt - um einen verjüngt ausgebildeten Materialbereich, der ein Verschwenken des Verschlusselements 60 um eine Achse parallel zur Längsrichtung L des Profilelements 10 ermöglicht, so dass das Verschlusselement 60 von der in Fig. 2 gezeigten Funktionsstellung A in eine in Fig. 3 gezeigte Funktionsstellung B verschwenkt werden kann. Die Materialstärke des Profilkörpers 20 im Scharnierbereich 61 wird dabei derart gewählt, dass sich das Verschlusselement 60 relativ leicht verschwenken lässt, dennoch aber in sich stabil bleibt.

Auf der der ersten Seite S1 gegenüberliegenden zweiten Seite S2 der Rastausnehmung 50 steht das Verschlusselement 60 entlang der Längsrichtung L des Profilelements 10 kraft- und/oder formschlüssig mit dem Profilkörper 20 in Eingriff. Hierzu ist in der Tragrippe 56 ein Rastbereich 66 ausgebildet, der - bezogen auf den Profilschenkel 21 des Profilkörpers 20 - etwa auf der gleichen Höhe liegt wie der Scharnierbereich 61. Der Rastbereich 66 wird bevorzugt von einer Rastausnehmung 67 gebildet, die sich ebenfalls in Längsrichtung L des Profilelements 10 erstreckt. In der Funktionsstellung A greift das Verschlusselement 60 mit seinem freien Rand 69 kraft- und/oder formschlüssig in die Rastausnehmung 67 ein, so dass die Eingriffsöffnung 52 der Rastausnehmung 50 zunächst über die gesamte Länge des Profilelements 10 geschlossen ist.

Man erkennt in Fig. 2, dass das Verschlusselement 60 ein im Wesentlichen flächiges Element ist, dessen Ebene E in der Funktionsstellung A etwa senkrecht zum unteren Rand 92 der Fahrzeugscheibe 90 ausgerichtet ist, d.h. die Ebene E des Verschlusselements 60 und die Außenfläche 94 der Fahrzeugscheibe 90 liegen zumindest im Randbereich der Scheibe 90 etwa parallel zueinander. Darüber hinaus ist das Verschlusselement 60 auf der ersten Seite S1 im Scharnierbereich 61 an den Federschenkel 54 des Profilkörpers 20 angelenkt, während der gegenüber liegende freie Rand 69 lösbar in die Rastausnehmung 67 der Tragrippe 56 eingreift.

Damit verschließt das Verschlusselement 60 als eine Art Deckel die Rastausnehmung 50 und letztere ist - solange sich das Verschlusselement 60 in der Funktionsstellung A befindet - zuverlässig vor dem Eindringen von Schmutz und Staub geschützt.

Darüber hinaus überbrückt das Verschlusselement 60 in der Funktionsstellung A die Eingriffsöffnung 52 der Rastausnehmung 50, so dass sich der Federschenkel 54 mit seinem freien Ende 55 über das Verschlusselement 60 an der Tragrippe 56 des Profilkörpers 20 abstützen kann. Dies hat folgenden Effekt: wird der Profilkörper 20 - während der Montage des Profilelements 10 oder während der Lagerung oder Handhabung der Fahrzeugscheibe 90 - im Bereich des Federschenkels 54 mit einer Kraft beaufschlagt, verhindert das Verschlusselement 60, dass der Federschenkel 54 eingedrückt und die Rastausnehmung 50 verformt wird.

Das Verschlusselement 60 bildet damit eine Art Stütze, die dem Profilelement 10 im zweiten Abschnitt 30 einen Hohlquerschnitt verleiht. Dadurch erhält das Profilelement 10 insgesamt eine sehr hohe Stabilität und es besteht sogar die Möglichkeit, die Fahrzeugscheibe 90 mit ihrem gesamten Gewicht hochkant auf dem Profilelement 10 abzustellen, ohne dass die Rastausnehmung 50 deformiert oder der Federschenkel 54 beschädigt wird. Das Verschlusselement 60 leitet die auf den Federschenkel 54 einwirkende Kraft direkt in die Tragrippe 56 ein, die sich rückseitig am Rand der Fahrzeugscheibe 90 abstützt. Bei alledem sorgt der Rastbereich 66 am Profilkörper 20 dafür, dass das Verschlusselement 60 seitlich nicht ausweichen oder wegknicken kann, sondern in der Funktionsstellung A verbleibt.

Separate Kederleisten, die aufwendig in ein Profilelement eingebracht und nach der Montage der Scheibe im Kraftfahrzeug aufwendig von Hand entfernt werden müssen, sind damit nicht mehr notwendig, um das Profilelement 10 vor Deformationen oder Beschädigungen im Bereich der empfindlichen Rastausnehmung 50 zu schützen. Eine Kederleiste ist mit dem Verschlusselement 60 vielmehr bereits in dem erfindungsgemäßen Profilelement 10 integriert, d.h. das Verschlusselement 60 ist integraler Bestandteil des Profilelements 10.

Dennoch ist es jederzeit möglich, die Wasserkastenabdeckung 80 zu montieren, indem deren Rippe 82 in die Rastausnehmung 50 eingebracht wird. Dazu ist es lediglich notwendig, die Rastausnehmung 50 zu öffnen und das Verschlusselement 60 über den Scharnierbereich 61 nach innen zu schwenken. In dieser Funktionsstellung B gibt das Verschlusselement 60 die Eingriffsöffnung 52 der Rastausnehmung 50 frei und die Rippe 82 kann - wie gewohnt - in dem Profilelement 10 festgelegt werden.

Das Öffnen der Rastausnehmung 50 kann über ein (nicht dargestelltes) Werkzeug erfolgen, mit dem das Verschlusselement 60 in die Rastausnehmung 50 eingedrückt wird. Dabei löst sich der Rand 69 des Verschlusselements 60 aus der Rastausnehmung 67 in der Tragrippe 56 und das Verschlusselement 60 schwenkt nach innen.

Man kann für das Öffnen der Rastausnehmung 50 aber auch die Rippe 82 der Wasserkastenabdeckung 80 verwenden, indem diese einfach auf das Verschlusselement 60 aufgesetzt und nach innen in die Rastausnehmung 60 hineingedrückt wird. Auch dadurch löst sich das Verschlusselement aus dem Rastbereich 66 der Tragrippe 56. Es gelangt in seine zweite Funktionsstellung B und die Rippe 82 kann in dem Profilelement 10 einrasten. Das Öffnen der Rastausnehmung 50 und das Festlegen der Wasserkastenabdeckung 80 findet damit in nur einem Arbeitsgang statt, was sich äußerst günstig auf die Handhabung des Profilelements 10 auswirkt. Eine separate Kederleiste muss weder aus dem Profilelement 10 entfernt noch entsorgt werden.

Das Verschlusselement 60 kann - in einer alternativen Ausführungsform zu dem in der Tragrippe 56 ausgebildeten Rastbereich 66 - entlang der Längsrichtung L des Profilelements 10 auf der der ersten Seite S1 gegenüber liegenden zweiten Seite S2 der Rastausnehmung 50 in der ersten Funktionsstellung A auch über einen (nicht näher bezeichneten) verjüngt ausgebildeten Bereich mit dem Profilkörper 20 einstückig verbunden sein. Dieser verjüngt ausgebildete Bereich ist dabei derart ausgebildet, dass er das Verschlusselement 60 in der Funktionsstellung A sicher fixiert, während er beim Eindringen eines Werkzeugs oder der Rippe 82 der Wasserkastenabdeckung 80 in die Rastausnehmung 50 aufbricht und so das Verschwenken des Verschlusselements 60 in die Funktionsstellung B ermöglicht.

Für das kraft- und/oder formschlüssige Festlegen der Rippe 82 in der Rastausnehmung 50 ist ein Rastelement 100 vorgesehen. Dieses kann - wie in den Fig. 2 und 3 gezeigt - als Rippe ausgebildet sein, die sich in Längsrichtung L des Profilelements 10 erstreckt. Es handelt sich um einen zumindest teilweise elastisch verformbaren Körper, der im Koextrusionsverfahren aus einem weich-elastischen Material, beispielsweise einem thermoplastischem Elastomer (TPE), einem Moosgummi oder einem anderen geeigneten Material, gefertigt und derart ausgebildet und angeordnet ist, dass das Einführen der Rippe 82 der Wasserkastenabdeckung 80 in die Rastausnehmung 50 in Fügerichtung R1 mit relativ geringem Kraftaufwand möglich ist, während das Herausziehen der Rippe 82 aus der Rastausnehmung 50 in entgegengesetzter Richtung R2 deutlich erschwert wird.

Wie die Fig. 2 und 3 weiter zeigen, liegt das Rastelement 100 innerhalb der Rastausnehmung 50 in einem Winkel α zur Richtung R1, R2 und damit in einem spitzen Winkel zur Rippe 82 der Wasserkastenabdeckung 80. Es ragt ferner zumindest abschnittsweise in die Eingriffsöffnung 52 der Rastausnehmung 50 hinein und ist innerhalb dieser kraft- und/oder formschlüssig mit der Rippe 82 der Wasserkastenabdeckung 80 in Eingriff bringbar, so dass letzterer in montierter Stellung dauerhaft fest aber lösbar fixiert wird.

Um dies zu unterstützen kann das Rastelement 100 an seiner (nicht näher bezeichneten) freien Längskante mit einer Wölb- oder Nasenkante versehen sein, während die Rippe 82 der Wasserkastenabdeckung 80 mit einer zugeordneten Nasenkante 85 bzw. einer (nicht näher bezeichneten) Hinterschneidung versehen ist. Dadurch kann sich das freie Ende des Rastelements 100 bzw. dessen Wölb- oder Nasenkante in montierter Stellung der Wasserkastenabdeckung 80 an deren Rippe 82 abstützen, so dass eine dauerhaft feste und stabile Verrastung gewährleistet ist.

Das Rastelement 100 ist ebenso wie das Dichtelement 110 an der Tragrippe 56 festgelegt und zwar im Bereich einer Hinterschneidung 59. Es kann ferner zwischen seinem Anbindungsbereich an der Tragrippe 56 und der endseitig ausgebildeten Wölb- oder Nasenkante einen verjüngt ausgebildeten Mittelabschnitt aufweisen, so dass sich eine etwa konkave Querschnittsfläche ergibt. Diese ermöglicht es dem Rastelement 100 seitlich oder quer zu dessen Längsrichtung auszuweichen, sobald die Rippe 82 der Wasserkastenabdeckung 80 in die Rastausnehmung 50 eingeführt wird. Um diesen Effekt zu unterstützen ist die Rippe 82 der Wasserkastenabdeckung 80 endseitig mit einer Schrägfläche oder -flanke 86 versehen, welche das Rastelement 100 zur Seite drücken kann. Je nach gewünschtem Kraftaufwand, der für das Einführen der Rippe 82 in die Rastausnehmung 50 notwendig sein soll, kann das Rastelement 100 im Querschnitt auch keil- oder quaderförmig ausgebildet sein. Das Rastelement 100 kann aber auch ergänzend oder alternativ zumindest abschnittsweise aus unterschiedlichen Materialien gefertigt werden. Beispielsweise kann die Nasenkante des Rastelements 100 aus einem härteren Material bestehen als der Mittelabschnitt.

Das Rastelement 100 ist - wie auch das Dichtelement 110 - bevorzugt stoffschlüssig mit der Tragrippe 56 verbunden. Es kann aber auch einstückig mit diesem ausgebildet sein.

Man erkennt in Fig. 3, dass die Rippe 82 der Wasserkastenabdeckung 80 beim Einführen in die Rastausnehmung 50 zunächst das von dem Rastbereich 66 und dessen Rastausnehmung 67 in der Funktionsstellung A gehaltene Verschlusselement 60 aus dem Rastbereich 66 löst und nach innen verschwenkt. Dabei drängt das Verschlusselement 60 an dem Rastelement 100 vorbei. Anschließend drückt die Rippe 82 das in dem Winkel α zur Fügerichtung R1 in die Eingriffsöffnung 52 der Rastausnehmung 50 hineinragende Rastelement 100 ebenfalls zur Seite, wobei die Schrägflanke 86 der Rippe 82 das Rastelement 100 in die Hinterschneidung 59 der Tragrippe 56 zurückdrängt.

Der Scharnierbereich 61, der Rastbereich 66 und die Geometrie bzw. die Elastizität des Rastelements 100 sind dabei derart aufeinander abgestimmt, dass die Kraft für das Einführen der Rippe 82 in die Rastausnehmung 50 bis zum Erreichen der endgültigen Rastposition nicht größer wird als die Klebekraft, mit der das Profilelement 10 an der Fahrzeugscheibe 90 haftet. Die Klebeverbindung zwischen dem Profilelement 10 und der Fahrzeugscheibe 90 wird mithin nicht zu hoch belastet und eine zusätzliche Abstützung des Profilelements 10 gegenüber der Karosserie ist grundsätzlich nicht erforderlich. Eine solche Abstützung kann jedoch - wenn sie gewünscht ist - vorgesehen werden.

Sobald die Wasserkastenabdeckung 80 und ihre Rippe 82 die vorgesehene Endstellung erreicht hat, liegt das Verschlusselement 60 innerhalb der Rastausnehmung 50 in der Funktionsstellung B (siehe Fig. 3) und das Rastelement 100 hintergreift die an der Rippe 82 ausgebildete Nasenkante 85, wobei sich die Wölb- oder Nasenkante des Rastelements 100 kraft- und/oder formschlüssig an der Rippe 82 abstützt. Das Rastelement 100 bildet damit einen Widerhaken, der die Wasserkastenabdeckung 80 bzw. deren Rippe 82 kraft- und formschlüssig in der Rastausnehmung 50 bzw. am Profilelement 10 festlegt.

Will man die Wasserkastenabdeckung 80 demontieren, muss man die Rippe 82 wieder aus ihrer Verrastung lösen. Dazu ist es notwendig, den innerhalb der Rastausnehmung 50 quer stehenden Widerhaken 100 zu überwinden, was jedoch deutlich mehr Kraft erfordert als der Fügevorgang. Die Wasserkastenabdeckung 80 ist damit stets sicher und zuverlässig in dem Profilelement 10 verankert, kann aber bei Bedarf dennoch ausgebaut und wie oben beschrieben ohne großen Kraftaufwand wieder montiert werden.

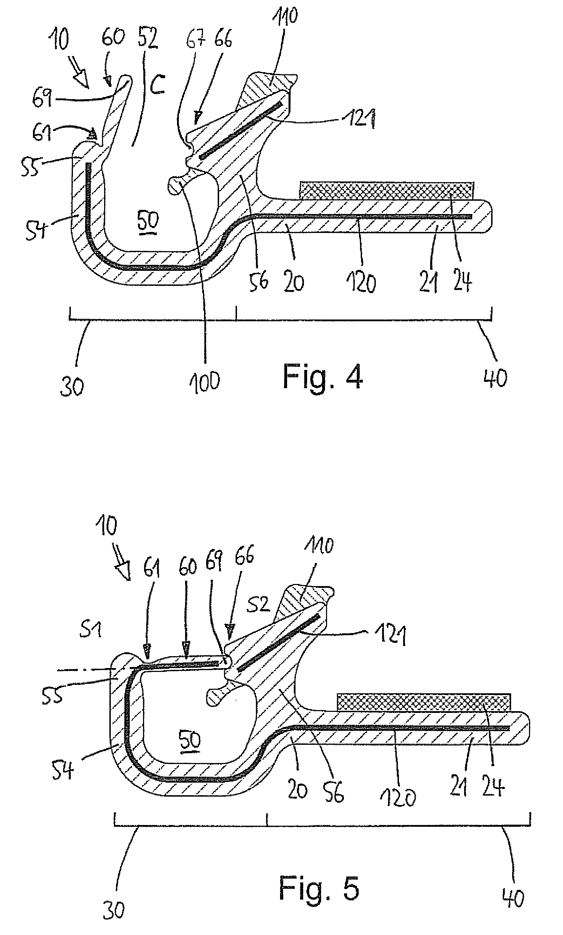

Fig 4 zeigt das erfindungsgemäße Profilelement 10 in einem Zustand unmittelbar nach dem Extrusionsprozess. Hier befindet sich das Verschlusselement 60 noch in einer Öffnungsstellung und damit in einer dritten Funktionsstellung C. Dies bietet den Vorteil, dass man das Profilelement 10 bzw. das Spaltmaß der Rastausnehmung 50 mit einem (nicht gezeigten) Werkzeug kalibrieren kann, wobei das Werkzeug von außen durch die Eingriffsöffnung 52 hindurch in die Rastausnehmung 50 eingreifen kann.

Ist der Kalibrier- bzw. Justiervorgang abgeschlossen, wird das Verschlusselement 60 mit einem geeigneten Werkzeug in die Funktionsstellung A gebracht. Dabei wird das Verschlusselement 60 in dem Scharnierbereich 61 verschwenkt. Anschließend kann das Profilelement 10 wie oben beschrieben an einer Fahrzeugscheibe 90 angebracht werden.

Das in Fig. 5 gezeigte Profilelement 10 ist im Wesentlichen genauso aufgebaut wie das Profilelement der Fig. 2 bis 4. Gleiche Elemente sind daher mit gleichen Bezugszeichen versehen, was nachfolgend auch für alle weiteren Ausführungsformen gilt. Diese haben mithin alle den gleichen Grundgedanken, nämlich eine Kederleiste in Form eines Verschlusselements 60 in das Profilelement 10 so zu integrieren, dass eine separate Kederleiste weder in das Profilelement 10 eingesetzt, noch aus diesem aufwendig entfernt werden muss. Dennoch soll das Profilelement 10 vor der Montage der Wasserkastenabdeckung oder eines anderen Bauteils vor äußeren Kräften, die eine Verformung der meist empfindlichen Rastausnehmung verursachen könnten, zuverlässig geschützt sein. Dazu dient das Verschlusselement 60, das von einer ersten Funktionsstellung A in eine zweite Funktionsstellung B verschwenkt werden kann.

In der Fig. 5 ist in den Profilkörper 20 des Profilelements 10 - wie auch bereits in der Ausführungsform der Fig. 2 bis 4 - eine Versteifungseinlage 120 eingebracht, die sich in Längsrichtung L des Profilelements 10 erstreckt. Quer zur Längsrichtung L reicht die Verstärkungseinlage 120 von dem Profilschenkel 21 des ersten Abschnitts 40 bis in den Federschenkel 54 des zweiten Abschnitts 30 hinein. Eine weitere separate Versteifungseinlage 121 ist in der Tragrippe 56 ausgebildet.

Im Unterschied zu der Ausführungsform der Fig. 2 bis 4 erstreckt sich die Versteifungseinlage 120 in der Fig. 5 jedoch bis in das Verschlusselement 60 hinein, das mithin ebenfalls in sich verstärkt ausgebildet ist. Das gleiche gilt für den Scharnierbereich 61, der aufgrund der Verstärkungseinlage 120 in seiner Elastizität oder Plastizität individuell eingestellt werden kann. So kann beispielweise die Verstärkungseinlage 120 dafür sorgen, dass zum einen der Widerstand beim Verschwenken des Verschlusselements 60 nicht zu groß ist. Gleichzeitig kann die Verstärkungseinlage 120 dafür sorgen, dass das Verschlusselement 60 nach dem Herauslösen der Rippe 82 der Wasserkastenabdeckung 80 aus der Rastausnehmung 50 nicht wieder in die Funktionsstellung A zurück gelangt, sondern in der Funktionsstellung B verbleibt.

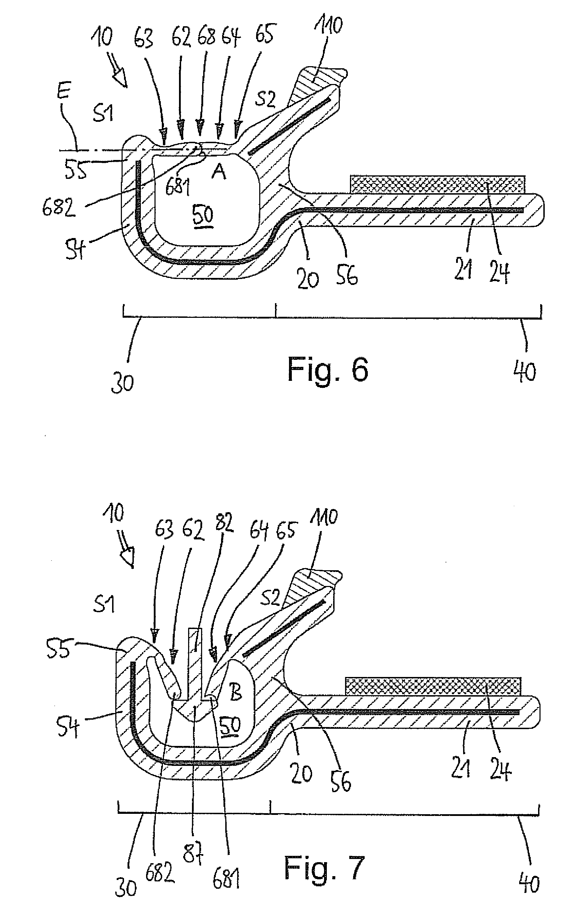

In der Ausführungsform der Fig. 6 und 7 sind anstelle von einem Verschlusselement zwei Verschlusselemente 62, 64 vorgesehen, welche die Rastausnehmung 50 in der Funktionsstellung A mittig verschließen. Dazu ist entlang der Längsrichtung L des Profilelements 10 auf der ersten Seite S1 der Rastausnehmung 50 ein erstes Verschlusselement 62 ausgebildet, während auf der gegenüber liegenden zweiten Seite S2 ein zweites Verschlusselement 64 an dem Profilkörper 20 angelenkt ist.

Zwischen den Verschlusselementen 62, 64 und dem Federschenkel 54 des Profilkörpers 20 einerseits und der Tragrippe 56 des Profilskörpers 20 andererseits ist jeweils ein Scharnierbereich 63, 65 ausgebildet. Auch hierbei handelt es sich vorzugsweise um verjüngt ausgebildete Materialbereiche, die ein Verschwenken des jeweiligen Verschlusselements 62, 64 um eine Achse parallel zur Längsrichtung L des Profilelements 10 ermöglichen, so dass die Verschlusselemente 62, 64 von der in Fig. 6 gezeigten Funktionsstellung A in eine in Fig. 7 gezeigte Funktionsstellung B verschwenkt werden können. Die Materialstärke des Profilkörpers 20 in den Scharnierbereichen 63, 65 wird dabei derart gewählt, dass sich die Verschlusselemente 62, 64 relativ leicht verschwenken lassen, dennoch aber in sich stabil bleiben. Beide Scharnierbereiche 63, 65 liegen - bezogen auf den Profilschenkel 21 des Profilkörpers 20 - etwa auf der gleichen Höhe.

Zwischen den Verschlusselementen 62, 64 ist ein Rastbereich 68 ausgebildet, so dass die Verschlusselemente 62, 64 in der ersten Funktionsstellung A kraft- und/oder formschlüssig miteinander in Eingriff stehen. Der Rastbereich 68 kann von einer Rastnut 681 gebildet sein, die in Längsrichtung L des Profilelements 10 im seitlichen Rand eines der Verschlusselemente 62, 64 ausgebildet ist. Das jeweils andere Verschlusselement 62, 64 greift in der Funktionsstellung A mit seinem seitlichen Rand 682 in die Rastnut 681 ein, so dass die Eingriffsöffnung 52 der Rastausnehmung 50 zunächst über die gesamte Länge des Profilelements 10 mittig geschlossen ist und sich der Federschenkel 54 über die Verschlusselemente 62, 64 an der Tragrippe 56 abstützt. Man erkennt zudem in Fig. 6, dass auch hier die Verschlusselemente 62, 64 in einer Ebene E liegen, so dass eine auf den Federschenkel 54 einwirkende Kraft über die Verschlusselemente 62, 64 stets in die Tragrippe 56 eingeleitet wird.

Damit verschließen die Verschlusselemente 62, 64 als Stützdeckel die Rastausnehmung 50 und letztere ist - solange sich die Verschlusselemente 62, 64 in der Funktionsstellung A befinden - zuverlässig vor dem Eindringen von Schmutz und Staub geschützt. Zudem überbrücken die Verschlusselemente 62, 64 in der Funktionsstellung A die Eingriffsöffnung 52 der Rastausnehmung 50, so dass diese vor Verformungen oder Beschädigungen wirksam geschützt ist.

Die Verschlusselemente 62, 64 können in einer alternativen Ausführungsform mittig entlang der Längsachse L auch einstückig ausgebildet sein, namentlich über einen verjüngt ausgebildeten Bereich, der eine Sollbruchstelle bildet, die beim Eindringen der Rippe 82 der Wasserkastenabdeckung 80 in die Rastausnehmung 50 aufbricht.

Wird die Rippe 82 der Wasserkastenabdeckung 80 auf die Verschlusselemente 62, 64 aufgesetzt und durch diese hindurch in die Rastausnehmung 50 eingedrückt, weichen die Verschlusselemente 62, 64 über die Scharnierbereiche 63, 65 nach innen und seitlich aus, bis die Rippe 82, die bevorzugt mit einem im Querschnitt pilzförmigen Endbereich 87 versehen ist, hinter den Verschlusselementen 62, 64 einrastet. Letztere bilden damit in der Funktionsstellung B selbst Rastelemente, welche die Rippe 82 in der Rastausnehmung 50 festlegen. Dabei ist das Einfügen der Rippe 82 in Fügerichtung R1 in die Rastausnehmung 50 mit einer geringeren Kraft möglich als das Herausziehen der Rippe 82 aus der Rastausnehmung 50 in der entgegengesetzten Richtung R2. Dies liegt darin begründet, dass die Verschlusselemente 62, 64 - wie in Fig. 7 gezeigt - in der Funktionsstellung B in einem Winkel schräg zur Richtung R2 angestellt sind und damit für die Rippe 82 und deren Endbereich 87 als Widerhaken wirken.

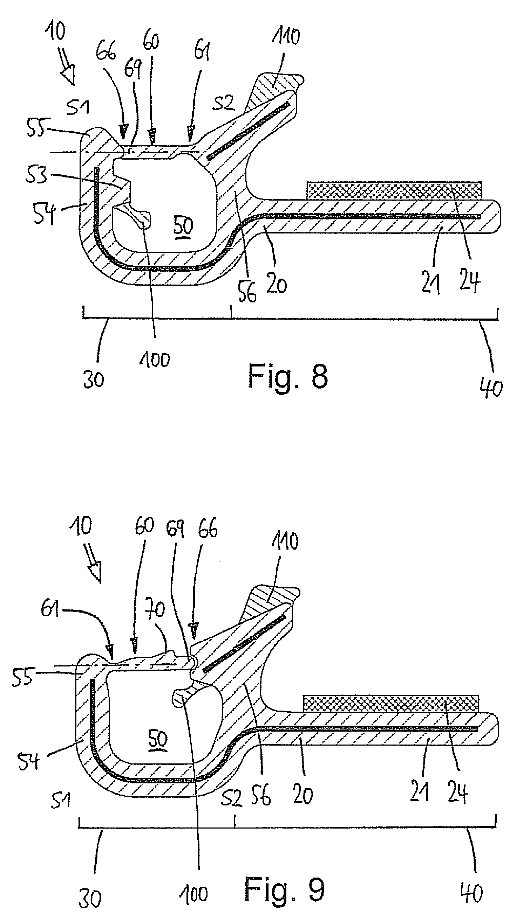

Das erfindungsgemäße Profilelement 10 in der Ausführungsform von Fig. 8 ist im Vergleich zu den vorherigen Ausführungsbeispielen gespiegelt ausgebildet. Das hier wieder einteilige Verschlusselement 60 ist auf der zweiten Seite S2 über einen Scharnierbereich 61 an die Tragrippe 56 angelenkt, während der Rastbereich 66 auf der gegenüber liegenden Seite S1 am freien Ende 55 des Federschenkels 54 ausgebildet ist. Dabei ist jedoch der freie Randbereich 69 des Verschlusselements 60 mit einer Rastnut versehen, während der Federschenkel endseitig einen (nicht näher bezeichneten) Rastvorsprung bildet, der in der Funktionsstellung A kraft- und/oder formschlüssig in die Rastnut eingreift.

Auch das Rastelement 100 ist im Vergleich mit den vorherigen Ausführungsformen auf der anderen Seite angeordnet, namentlich auf der ersten Seite S1. Es ist an einem Vorsprung 53 befestigt, der einen Hinterschnitt für das Rastelement 100 bildet, damit dieses beim Einführen der Rippe 82 der Wasserkastenabdeckung 80 nach hinten ausweichen kann. Im Übrigen funktioniert das Profilelement der Fig. 8 wie bereits oben geschildert.

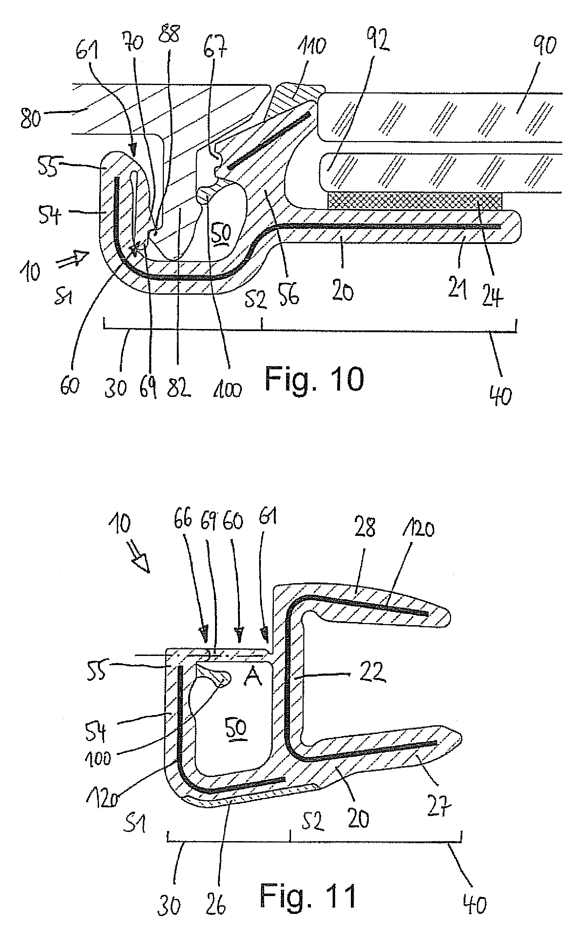

Eine weitere vorteilhafte Ausführungsform ist in den Fig. 9 und 10 dargestellt. Hier ist an dem Verschlusselement 60 ein Rastelement 70 vorgesehen, das in Form eines sich in Längsrichtung L des Profilelements 10 erstreckenden, im Querschnitt etwa dreieckigen Vorsprungs ausgebildet ist. Dieser bildet in der Funktionsstellung B betrachtet einen Hinterschnitt für die Rippe 82 der Wasserkastenabdeckung 80, die hierzu mit einer weiteren Nasenkante 88 versehen ist.

Gelangt das Verschlusselement 60, wie in Fig. 10 gezeigt, von der ersten Funktionsstellung A in die zweite Funktionsstellung B, greift die Rippe 82 der Wasserkastenabdeckung 80 mit der weiteren Nasenkante 88 hinter den Vorsprung 70 am Verschlusselement 60. Dadurch wir die Rippe 82 nicht nur von dem Rastelement 100 in der Rastausnehmung 50 gehalten, sondern zusätzlich von dem Rastelement 70 des Verschlusselements 60. Letzteres wird ebenfalls in der Funktionsstellung B arretiert, so dass die Rippe 82 stets zuverlässig in dem Profilelement 10 gehalten ist.

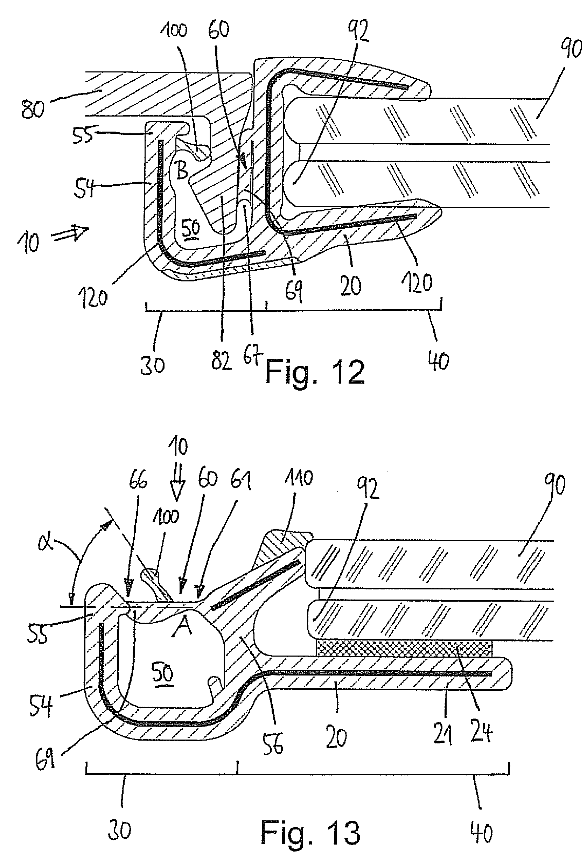

Das in den Fig. 11 und 12 gezeigte erfindungsgemäße Profilelement 10 ist im ersten Abschnitt 40 nicht L-förmig, sondern U-förmig ausgebildet. Es ist ein Strangpressprofil, das im Koextrusionsverfahren hergestellt wird, wobei an der Unterseite des Federschenkels 54 ein Einsatz 26 aus einem anderen Material, vorzugsweise einem steiferen Material vorgesehen ist. Dieser Einsatz 26 dient beispielsweise dazu die Steifigkeit des Federschenkels 54 zu optimieren. Der Profilkörper 20 erstreckt sich in Extrusionsrichtung R, die auch hier identisch ist mit der Längsrichtung L des Profilelements 10. Quer zur Längsrichtung L besitzt das Profilelement 10 einen Querschnitt, der an die jeweiligen Bedürfnisse der Einbausituation angepasst ist, beispielsweise in Abhängigkeit von den Abmessungen und Geometrie der Wasserkastenabdeckung 80 und/oder der Windschutzscheibe 90.

Der U-förmige Abschnitt 40 des Profilelements 10 hat im Übergang zu dem zweiten Abschnitt 30 einen Basisschenkel 22, der an seinen Enden jeweils einen Profilschenkel 27, 28 trägt. Diese übergreifen den Rand 92 einer in das U-Profil eingeführten Fahrzeugscheibe 90, die von den leicht nach innen angestellten Profilschenkeln 27, 28 geklemmt wird, so dass das Profilelement kraftschlüssig auf dem Rand 92 der Scheibe 90 gehalten ist (siehe dazu Fig. 12).

Der Basisschenkel 22 trägt an seiner den Profilschenkeln 27, 28 abgewandten Seite das sich entlang der Längsrichtung L des Profilelements 10 erstreckende Verschlusselement 60, das einstückig an dem Profilkörper 20 ausgebildet ist und das in der in Fig. 11 mit A bezeichneten Funktionsstellung die Rastausnehmung 50 bzw. deren Eingriffsöffnung 52 verschließt.

Zwischen dem Basisschenkel 22 des Profilkörpers 20 und dem Verschlusselement 60 ist auf der zweiten Seite S2 der Rastausnehmung 50 ein Scharnierbereich 61 ausgebildet. Hierbei handelt es sich beispielsweise - wie dargestellt - um einen verjüngt ausgebildeten Materialbereich, der ein Verschwenken des Verschlusselements 60 um eine Achse parallel zur Längsrichtung L des Profilelements 10 ermöglicht, so dass das Verschlusselement 60 von der in Fig. 11 gezeigten Funktionsstellung A in eine in Fig. 12 gezeigte Funktionsstellung B verschwenkt werden kann. Die Materialstärke des Profilkörpers 20 im Scharnierbereich 61 wird dabei derart gewählt, dass sich das Verschlusselement 60 relativ leicht verschwenken lässt, dennoch aber in sich stabil bleibt.

Auf der der zweiten Seite S2 gegenüberliegenden ersten Seite S1 der Rastausnehmung 50 steht das Verschlusselement 60 entlang der Längsrichtung L des Profilelements 10 kraft- und/oder formschlüssig mit dem freien Ende 55 des Federschenkels 54 in Eingriff. Hierzu ist an dem Federschenkel 54 ein Rastbereich 66 ausgebildet, der - bezogen auf die Profilschenkel 27, 28 des Profilkörpers 20 - etwa auf der gleichen Höhe liegt wie der Scharnierbereich 61. Der Rastbereich 66 wird bevorzugt von einem (nicht näher bezeichneten) Rastvorsprung gebildet, die sich ebenfalls in Längsrichtung L des Federschenkels 54 erstreckt. In der Funktionsstellung A ist das Verschlusselement 60 mit seinem freien Rand 69, in dem eine entsprechende Längsnut eingebracht ist, kraft- und/oder formschlüssig mit dem Vorsprung am Federschenkel 54 verbunden, so dass die Eingriffsöffnung 52 der Rastausnehmung 50 zunächst über die gesamte Länge des Profilelements 10 geschlossen ist.

Man erkennt in Fig. 11, dass das Verschlusselement 60 ein im Wesentlichen flächiges Element ist, dessen Ebene E in der Funktionsstellung A etwa senkrecht zum Basisschenkel 22 des Profilkörpers 20 und zum unteren Rand 92 der Fahrzeugscheibe 90 ausgerichtet ist, d.h. die Ebene E des Verschlusselements 60 und die Außenfläche 94 der Fahrzeugscheibe 90 liegen zumindest im Randbereich der Scheibe 90 etwa parallel zueinander. Darüber hinaus ist das Verschlusselement 60 auf der zweiten Seite S2 im Scharnierbereich 61 an den Basisschenkel 22 des Profilkörpers 20 angelenkt, während der gegenüber liegende freie Rand 69 lösbar mit dem Federschenkel 54 verbunden ist.

Damit verschließt das Verschlusselement 60 als eine Art Deckel die Rastausnehmung 50 und letztere ist - solange sich das Verschlusselement 60 in der Funktionsstellung A befindet - zuverlässig vor dem Eindringen von Schmutz und Staub geschützt. Zudem überbrückt das Verschlusselement 60 in der Funktionsstellung A die Eingriffsöffnung 52 der Rastausnehmung 50, so dass sich der Federschenkel 54 mit seinem freien Ende 55 über das Verschlusselement 60 an dem Basisschenkel 22 des Profilkörpers 20 abstützen kann. Das Verschlusselement 60 bildet damit eine Art Stütze, die dem Profilelement 10 im zweiten Abschnitt 30 einen Hohlquerschnitt verleiht, der die Rastausnehmung 50 vor Deformationen und Beschädigungen schützt.

Die Anordnung, Ausbildung und die Funktion des Rastelements 100 entspricht den bereits dargestellten Ausführungsformen, der Fig. 1 bis 10, so dass an dieser Stelle darauf vollinhaltlich Bezug genommen wird.

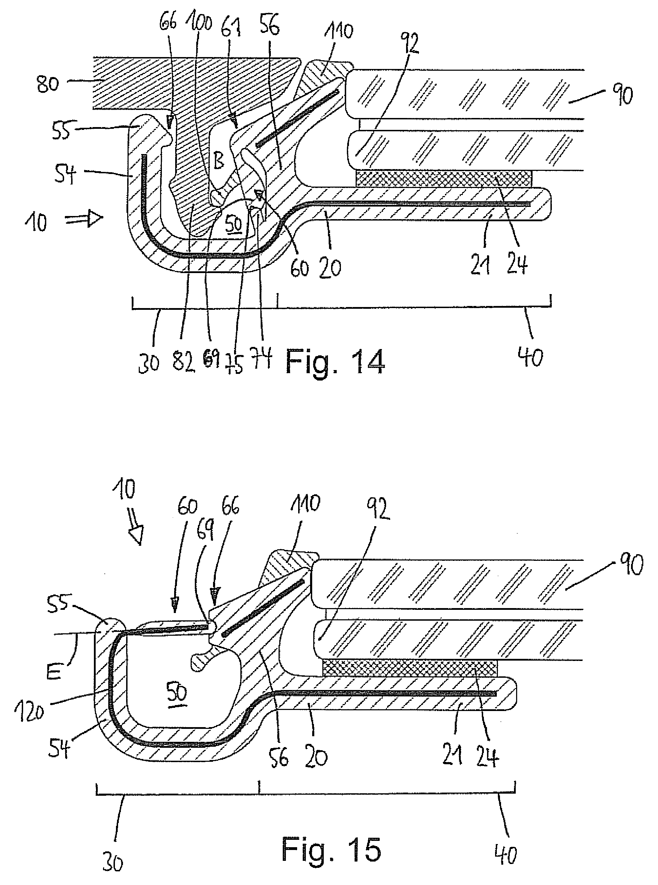

In der Ausführungsform von Fig. 13 ist das Rastelement 100, das in Bezug auf die Rippe 82 der Wasserkastenabdeckung 80 als Widerhaken wirkt, nicht innerhalb der Rastausnehmung 50 und an der Tragrippe 56 angeordnet, sondern zunächst außerhalb der Rastausnehmung 50 an dem Verschlusselement 60. Gelangt letzteres - wie in Fig. 14 dargestellt - von der Funktionsstellung A in die Funktionsstellung B, dann gelangt auch das Rastelement 100 in die Rastausnehmung 50 hinein und hintergreift dort - wie oben beschrieben - die Rippe 82 der Wasserkastenabdeckung 80.

Damit das Rastelement 100 innerhalb der Rastausnehmung 50 stets eine definierte Position einnimmt, ist das Verschlusselement 60 in der zweiten Funktionsstellung B innerhalb der Rastausnehmung 50 arretierbar. Dazu ist in der Rastausnehmung 50 ein Rastvorsprung 74 vorgesehen, der sich in Längsrichtung L des Profilelements 10 erstreckt. Im freien Randbereich 69 des Verschlusselements 60 ist eine Rastnut 75 ausgebildet, die in der Funktionsstellung A mit dem Federschenkel 54 und in der Funktionsstellung B mit dem Rastvorsprung 74 in Eingriff steht. Auf diese Weise ist das Verschlusselement 60 in jeder Funktionsstellung A, B sicher arretiert und es kann einerseits seine Stützfunktion und nach dem Einführen der Rippe 82 in die Rastausnehmung 50 über das Rastelement 100 seine Rastfunktion ausüben.

Die Ausführungsform der Fig. 15 zeigt eine Variante für den Scharnierbereich 61. Dieser ist nicht mehr wie vorstehend von einem verjüngt ausgebildeten Materialbereich gebildet. Vielmehr liegt die Versteifungseinlage 120 ein Stück weit frei und bildet an dieser Stelle das Scharnier für das Verschlusselement 60, das wie vorstehend beschrieben über das Scharnier von der Funktionsstellung A in die Funktionsstellung B schwenken kann.

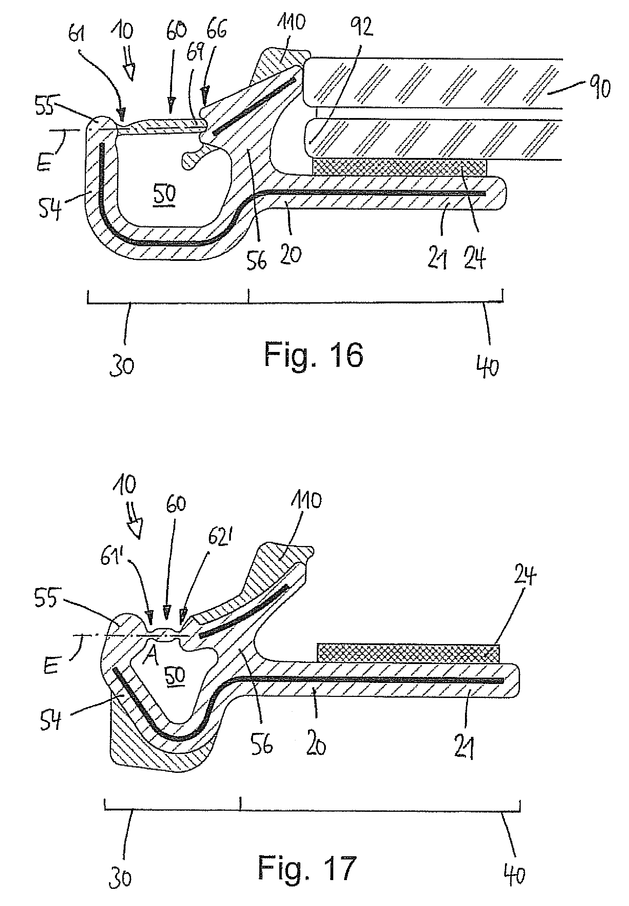

In Fig. 16 ist das Verschlusselement 60 gegenüber dem Profilkörper 20 aus einem anderen Material gefertigt. Man kann aber auch das Verschlusselement 60 und den Profilkörper 20 aus dem gleichen Material fertigen und nur für den Scharnierbereich 61 ein anderes Material wählen.

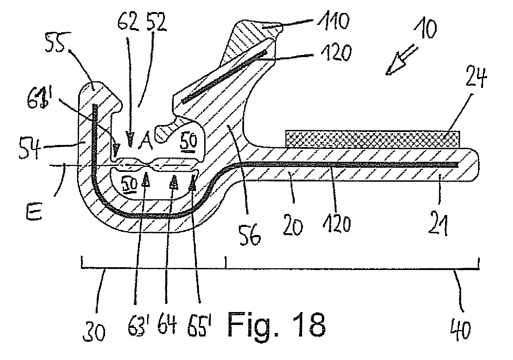

Die Ausführungsformen der Fig. 17 und 18 verzichten auf Scharnierbereiche 61, 63, 65 zwischen den Verschlusselementen 60, 62, 64 und dem Profilkörper 20. Das Verschlusselement 60, 62, 64 ist vielmehr entlang der Längsrichtung L des Profilelements 10 über verjüngt ausgebildete Bereiche 61', 62', 63', 65' mit dem Profilkörper 20 verbunden. Die Materialstärke in diesen Bereichen 61', 62', 63', 65' ist derart bemessen, dass das Verschlusselement 60 in der Funktionsstellung A seine Stützfunktion wahrnehmen kann. Dass aber die Bereiche 61', 62', 63', 65' als Sollbruchstellen aufbrechen, wenn die Rippe 82 der Wasserkastenabdeckung 80 in die Rastausnehmung 50 eingebracht wird oder wenn die Eingriffsöffnung 52 mittels eines Werkzeugs geöffnet wird.

In der Ausführungsform gemäß Fig. 18 sind drei Bereiche 61',63', 65' als Sollbruchstellen vorgesehen. Zudem liegen die Verschlusselemente 62, 64 tiefer in der Rastausnehmung 50, nämlich etwa auf der Höhe des Profilschenkels 21, der dadurch die von den Verschlusselementen 62, 64 in der Funktionsstellung A aufgenommenen Kräfte ableitet.

Zusammenfassend lässt sich festhalten, dass das erfindungsgemäße Profilelement 10 mit dem integrierten Verschlusselement 60 folgende Funktionen erfüllt:
▪ Schutz der Rastausnehmung 50 des Profilelements 10 vor Verschmutzung, die ein Einrasten der Rippe 82 der Wasserkastenabdeckung 80 behindern könnte;
▪ Stütz-/Schutzfunktion, damit die Rastausnehmung 50 maßhaltig bleibt während der Prozessschritte (a) Biegen des Profils, (b) Montage an der Scheibe 90 (insbesondere bei U-Profilen) und (c) Transport der üblicherweise aufrecht auf der Unterkante/dem Profil 10 stehenden Scheiben 90.

Der Grundgedanke der Erfindung liegt mithin darin, dass die bislang von einem separaten Keder- oder Schutzprofil erfüllten Aufgaben von dem Profilelement 10 selbst erfüllt werden. Dazu wird das Verschlusselement 60 in das Profil 10 integriert, wobei das Verschlusselement 60 die Rastöffnung am Profilelement 10 während des Biegens, der Montage an der Scheibe 90 und/oder während des Transports der Scheiben 90 überbrückt. Bei der Montage der Wasserkastenabdeckung 80 hingegen wird das Verschlusselement 60 entweder zerstört oder es klappt von der Funktionsstellung A in die Funktionsstellung B, so dass die Rippe 82 der Wasserkastenabdeckung 80 in die Rastausnehmung 50 eingesetzt und darin verrastet werden kann. Dies kann ggf. sogar in einem Schritt zusammen mit der Montage des Wasserkastens 80 erfolgen.

Die Erfindung ist nicht auf eine der vorbeschriebenen Ausführungsformen beschränkt, sondern in vielfältiger Weise abwandelbar.

So muss Verschlusselement entlang der Längsrichtung L des Profilelements 10 nicht vollständig durchgehend ausgebildet sein. Es kann vielmehr auch kammartig eingeschnitten oder auch abschnittsweise ausgebildet sein, wobei zwischen den einzelnen (nicht dargestellten) Verschlusselement-Abschnitten Lücken verbleiben.

Das gleiche gilt für die Ausbildung der Scharnierbereiche 61, 63, 65 oder der Sollbruchstellen 61', 62', 63', 65'. Auch diese können entlang der Längsrichtung L des Profilelements abschnittsweise mit (nicht gezeigten) Lücken dazwischen ausgebildet sein.

Mit diesen Varianten ist die Rastausnehmung 50 immer noch gut gegen das Eindringen von Verschmutzungen geschützt. Durch die Lücken oder Abstände zwischen den Verschlusselement-Abschnitten und/oder den Scharnierabschnitten können die Kräfte, die erforderlich sind, um das Verschlusselement 60, 62, 64 bzw. die Verschlusselemente mit der Rippe 82 des Bauteils 80 zu öffnen, noch präziser eingestellt werden.

Das Profilelement 10 wird bevorzugt als separater Profilstrang in einem Extrusions- oder Koextrusionsverfahren hergestellt. Denkbar ist aber auch, dass das Profilelement 10 - je nach Querschnittsgeometrie - direkt an den Rand 92 der Fahrzeugscheibe 90 anextrudiert oder in einem Spritzgießverfahren angespritzt wird.

Man erkennt jedoch, dass ein Profilelement (10) zum Verbinden eines Bauteils (80) mit einer Fahrzeugscheibe (90), einen Profilkörper (20) hat, der mit einem ersten Abschnitt (40) an einem Rand (92) der Fahrzeugscheibe (90) festlegbar ist, und der in einem zweiten Abschnitt (30) zur lösbaren Befestigung des Bauteils (80) an dem Profilelement (10) eine Rastausnehmung (50) aufweist, die sich in Längsrichtung (L) des Profilelements (10) erstreckt und in der eine Rippe (82) des Bauteils (80) kraft- und/oder formschlüssig festlegbar ist. An dem Profilkörper (20) ist ein Verschlusselement (60, 62, 64) ausgebildet, das die Eingriffsöffnung (52) der Rastausnehmung (50) in einer ersten Funktionsstellung (A) verschließt und in einer zweiten Funktionsstellung (B) freigibt. Das Verschlusselement (60, 62, 64) ist hierzu entlang der Längsrichtung (L) des Profilelements (10) auf einer ersten Seite (S1) der Rastausnehmung (50) an den Profilkörper (20) angelenkt. Auf der der ersten Seite (S1) gegenüber liegenden zweiten Seite (S2) der Rastausnehmung (50) steht das Verschlusselement (60) in der ersten Funktionsstellung (A) kraft- und/oder formschlüssig mit dem Profilkörper (20) in Eingriff.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritte, können sowohl für sich als auch in den verschiedensten Kombinationen erfindungswesentlich sein.

**Bezugszeichenliste**

| | | | |
|---|---|---|---|
| A | erste Funktionsstellung | 61', 62' 63', 65' | verjüngter Bereich |
| B | zweite Funktionsstellung | 66 | Rastbereich |
| C | dritte Funktionsstellung | 67 | Rastausnehmung |
| L | Längsrichtung | 68 | Rastbereich |
| R | Extrusionsrichtung | 681 | Rastnut |
| R1 | Richtung | 682 | seitlicher Rand |
| R2 | entgegengesetzte Richtung | 69 | freier Randbereich |
| S1 | erste Seite | 70 | Rastelement |
| S2 | zweite Seite | 74 | Rastvorsprung |
| α | Winkel | 75 | Rastnut |
| | | 76 | Rastbereich |
| 10 | Profilelement | 80 | Bauteil |
| 20 | Profilkörper | 82 | Rippe |
| 21 | Profilschenkel | 83 | Oberkante |
| 22 | Basisschenkel | 84 | Außenfläche |
| 23 | Fläche | 85 | Nasenkante |
| 24 | Haftschicht/Klebeband | 86 | Schrägfläche/Flanke |
| 26 | Einsatz | 87 | Endbereich |
| 27,28 | Profilschenkel | 88 | weitere Nasenkante |
| 30 | zweiter Abschnitt | 90 | Fahrzeugscheibe |
| 40 | erster Abschnitt | 92 | Rand |
| 50 | Rastausnehmung | 94 | Außenfläche |
| 52 | Eingriffsöffnung | 95 | Rückseite |
| 53 | Vorsprung | 100 | Rastelement |
| 54 | Federschenkel | 110 | Dichtlippe |
| 55 | freies Ende | 112 | Nasenkante |
| 56 | Tragrippe | 120 | Versteifungs-Einlage |
| 57 | Fläche | | |
| 58 | Höhlung | | |
| 59 | Hinterschneidung | | |
| 60,62,64 | Verschlusselement | | |
| 61, 63, 65 | Scharnierbereich | | |

## Patentansprüche

1. Profilelement (10) zum Verbinden eines Bauteils (80) mit einer Fahrzeugscheibe (90), mit einem Profilkörper (20), der mit einem ersten Abschnitt (40) an einem Rand (92) der Fahrzeugscheibe (90) festlegbar ist, und der in einem zweiten Abschnitt (30) zur lösbaren Befestigung des Bauteils (80) an dem Profilelement (10) eine Rastausnehmung (50) mit einer Eingriffsöffnung (52) aufweist, die sich in Längsrichtung (L) des Profilelements (10) erstreckt und in der eine Rippe (82) des Bauteils (80) kraft- und/oder formschlüssig festlegbar ist, **dadurch gekennzeichnet, dass** an dem Profilkörper (20) ein Verschlusselement (60, 62, 64) ausgebildet ist, das in einer ersten Funktionsstellung (A) die Eingriffsöffnung überbrückt und die Rastausnehmung (50) verschließt.

2. Profilelement nach Anspruch 1, **dadurch gekennzeichnet, dass** das Verschlusselement (60, 62, 64) entlang der Längsrichtung (L) des Profilelements (10) mit dem dem Profilkörper (20) verbunden ist, insbesondere über verjüngt ausgebildete Bereiche (61', 62', 65'), wobei vorzugsweise das Verschlusselement (60, 62, 64) einstückig mit dem Profilkörper (20) ist oder stoffschlüssig mit dem Profilkörper (20) ist.

3. Profilelement nach Anspruch 1 oder 2, **dadurch gekennzeichnet, dass** das Verschlusselement (60, 62, 64) die Eingriffsöffnung (52) der Rastausnehmung (50) in der ersten Funktionsstellung (A) verschließt und in einer zweiten Funktionsstellung (B) freigibt.

4. Profilelement nach einem der Ansprüche 1 bis 3, **dadurch gekennzeichnet, dass** das Verschlusselement (60, 62, 64) ein flächiges Element ist, dessen Ebene (E) im Wesentlichen senkrecht zum Rand (92) der Fahrzeugscheibe (90) ausgerichtet ist.

5. Profilelement nach einem der Ansprüche 1 bis 4, **dadurch gekennzeichnet, dass** zwischen dem Profilkörper (20) und dem Verschlusselement (60, 62, 64) ein Scharnierbereich (61, 63, 65) ausgebildet ist.

6. Profilelement nach einem der Ansprüche 1 bis 5, **dadurch gekennzeichnet, dass** der Profilkörper (20) und das Verschlusselement (60, 62, 64) aus unterschiedlichen Materialien gefertigt sind.

7. Profilelement nach einem der Ansprüche 1 bis 6, **dadurch gekennzeichnet, dass** ein Verschlusselement (60) vorgesehen ist, das entlang der Längsrichtung (L) des Profilelements (10) auf einer ersten Seite (S1) der Rastausnehmung (50) an den Profilkörper (20) angelenkt ist.

8. Profilelement nach Anspruch 7, **dadurch gekennzeichnet, dass** das Verschlusselement (60) entlang der Längsrichtung (L) des Profilelements (10) auf der der ersten Seite (S1) gegenüber liegenden zweiten Seite (S2) der Rastausnehmung (50) in der ersten Funktionsstellung (A) kraft- und/oder formschlüssig mit dem Profilkörper (20) in Eingriff steht.

9. Profilelement nach Anspruch 7, **dadurch gekennzeichnet, dass** das Verschlusselement (60) entlang der Längsrichtung (L) des Profilelements (10) auf der der ersten Seite (S1) gegenüber liegenden zweiten Seite (S2) der Rastausnehmung (50) in der ersten Funktionsstellung (A) über einen verjüngt ausgebildeten Bereich (62') mit dem Profilkörper (20) verbunden ist.

10. Profilelement nach einem der Ansprüche 1 bis 6, **dadurch gekennzeichnet, dass** zwei Verschlusselemente (62, 64) vorgesehen sind, wobei entlang der Längsrichtung (L) des Profilelements (10) ein erstes Verschlusselement (62) auf einer ersten Seite (S1) der Rastausnehmung (50) und ein zweites Verschlusselement (64) auf der der ersten Seite (S1) gegenüber liegenden zweiten Seite (S2) der Rastausnehmung (50) an den Profilkörper (20) angelenkt ist.

11. Profilelement nach Anspruch 10, **dadurch gekennzeichnet, dass** die Verschlusselemente (62, 64) in der ersten Funktionsstellung (A) kraft- und/oder formschlüssig miteinander in Eingriff stehen und/oder über einen verjüngt ausgebildeten Bereich (63') miteinander verbunden sind.

12. Profilelement nach einem der Ansprüche 1 bis 11, **dadurch gekennzeichnet, dass** wenigstens ein Verschlusselement (60, 62, 64) in der zweiten Funktionsstellung (B) innerhalb der Rastausnehmung (50) arretierbar ist.

13. Profilelement nach einem der Ansprüche 1 bis 12, **dadurch gekennzeichnet, dass** das Verschlusselement (60, 62, 64) derart ausgebildet ist, dass es in der zweiten Funktionsstellung (B) ein Rastelement für die Rippe (82) des Bauteils (80) bildet.

14. Profilelement nach einem der Ansprüche 1 bis 13, **dadurch gekennzeichnet, dass** das Verschlusselement (60, 62, 64) wenigstens ein Rastelement (70) aufweist oder trägt, das in der zweiten Funktionsstellung (B) kraft- und/oder formschlüssig mit der Rippe (82) des Bauteils (80) in Eingriff bringbar ist.

15. Profilelement nach einem der Ansprüche 1 bis 14, **dadurch gekennzeichnet, dass** ein Rastelement (100) für die Rippe (82) des Bauteils (80) innerhalb der Rastausnehmung (50) ausgebildet ist.

16. Profilelement nach Anspruch 13 oder 15, **dadurch gekennzeichnet, dass** das Rastelement (70) des Verschlusselements (60, 62, 64) und/oder das innerhalb der Rastausnehmung (50) ausgebildete Rastelement (100) in Bezug auf die Rippe (82) des Bauteils (80) einen Widerhaken bildet.

17. Profilelement nach einem der Ansprüche 1 bis 16, **dadurch gekennzeichnet, dass**
- der erste Abschnitt (40) des Profilelements (10) U-förmig ausgebildet ist oder
- der erste Abschnitt (40) des Profilelements (10) L-förmig ausgebildet ist und vorzugsweise der erste Abschnitt (40) des Profilelements (10) einen Profilschenkel (21) aufweist, der zumindest abschnittsweise eine Haftschicht (24) trägt.

18. Profilelement nach einem der Ansprüche 1 bis 17, **dadurch gekennzeichnet, dass** der Profilkörper (20) eine Dichtlippe (110) aufweist oder trägt.

19. Profilelement nach einem der Ansprüche 1 bis 18, **dadurch gekennzeichnet, dass** in dem Profilkörper (20) und/oder dem Verschlusselement (60, 62, 64) zumindest abschnittsweise mindestens eine Versteifungs-Einlage (120) vorgesehen ist.

20. Abdichtungsanordnung für den Übergang zwischen einer Fahrzeugscheibe (90) und einem Bauteil (80), insbesondere für den unteren Bereich einer Kraftfahrzeug-Windschutzscheibe, mit einem Profilelement (10) nach einem der Ansprüche 1 bis 19.

## Claims

1. A profile element (10) for connecting a part (80) to a vehicle window pane (90), comprising a profile body (20) whose first section (40) can be secured to an edge (92) of the vehicle window pane (90) and whose second section (30), for purposes of detachably fastening the part (80) to the profile element (10), has a latching recess (50) having an engagement opening (52) which extends in the lengthwise extension (L) of the profile element (10) and into which a rib (82) of the part (80) can be secured in a form-locking and/or friction-type connecting manner, **characterized in that** the profile body (20) comprises a closure element (60, 62, 64) which in a first functional position (A) bridges the engagement opening (52) and closes the latching recess (50).

2. The profile element according to claim 1, **characterized in that** the closure element (60, 62, 64) is joined to the profile body (20) along the lengthwise extension (L) of the profile element (10), in particular by means of weakened portions (61' 62', 65'), wherein preferably the closure element (60, 62, 64) is integral with or cohesively connected with the profile body (20).

3. The profile element according to claim 1 or 2, **characterized in that** the closure element (60, 62, 64) closes off the engagement opening (52) of the latching recess (50) when the closure element (60, 62, 64) is the first functional position (A) and that the closure element (60, 62, 64) allows for access to the engagement opening (52) of the latching recess (50) when the closure element (60, 62, 64) is in a second functional position (B).

4. The profile element according to one of claims 1 to 3, **characterized in that** the closure element (60, 62, 64) is a flat element whose plane (E) is oriented essentially perpendicular to the edge (92) of the vehicle window pane (90).

5. The profile element according to one of claims 1 to 4, **characterized in that** a hinge area (61, 63, 65) is formed between the profile body (20) and the closure element (60, 62, 64).

6. The profile element according to one of claims 1 to 5, **characterized in that** the profile body (20) and the closure element (60, 62, 64) are made of different materials.

7. The profile element according to one of claims 1 to 6, **characterized in that** a closure element (60) is provided that is hinged on the profile body (20) on a first side (S1) of the latching recess (50) along the lengthwise extension (L) of the profile element (10).

8. The profile element according to claim 7, **characterized in that**, the closure element (60), along the lengthwise extension (L) of the profile element (10), on the second side (S2) of the latching recess (50) and opposite from the first side (S1), in its first functional position (A), is engaged with the profile body (20) in a form-locking and/or friction-type connecting manner.

9. The profile element according to claim 7, **characterized in that**, the closure element (60), along the lengthwise extension (L) of the profile element (10), on the second side (S2) of the latching recess (50) and opposite from the first side (S1), is joined to the profile body (20) via a weakened area (62').

10. The profile element according to one of claims 1 to 6, **characterized in that** two closure elements (62, 64) are provided, whereby, along the lengthwise extension (L) of the profile element (10), a first closure element (62) is hinged on a first side (S1) of the latching recess (50), and a second closure element (64) is hinged on the profile body (20) on the second side (S2) of the latching recess (50), opposite from the first side (S1).

11. The profile element according to claim 10, **characterized in that**, in the first functional position (A), the closure elements (62, 64) are engaged with each other in a form-locking and/or friction-type connecting manner and/or are joined to each other via a weakened area (63').

12. The profile element according to one of claims 1 to 11, **characterized in that** at least one closure element (60, 62, 64) can be locked inside the latching recess (50) when it is in the second functional position (B).

13. The profile element according to one of claims 1 to 12, **characterized in that** the closure element (60, 62, 64) is configured in such a way that, when it is in the second functional position (B), it has or forms a latching element for the rib (82) of the part (80).

14. The profile element according to one of claims 1 to 13, **characterized in that** the closure element (60, 62, 64) has or comprises at least one latching element (70) that, in the second functional position (B), can engage in a form-locking and/or friction-type connecting manner with the rib (82) of the part (80).

15. The profile element according to one of claims 1 to 14, **characterized in that** a latching element (100) for the rib (82) of part (80) is formed inside the latching recess (50).

16. The profile element according to claim 13 or 15, **characterized in that** the latching element (70) of the closure element (60, 62, 64) and/or the latching element (100) formed inside the latching recess (50) forms a barb relative to the rib (82) of the part (80).

17. The profile element according to one of claims 1 to 16, **characterized in that**
- the first section (40) of the profile element (10) is configured so as to be U-shaped or
- the first section (40) of the profile element (10) is configured so as to be L-shaped, wherein preferably the first section (40) of the profile element (10) has a profile leg (21) that comprises an adhesive layer (24), at least in certain sections.

18. The profile element according to one of claims 1 to 17, **characterized in that** the profile body (20) has or comprises a sealing lip (110).

19. The profile element according to one of claims 1 to 18, **characterized in that** at least one reinforcement insert (120) is provided, at least in certain sections, in the profile body (20) and/or in the closure element (60, 62, 64).

20. A sealing arrangement for the transition between a vehicle window pane (90) and a part (80), especially for the lower area of a vehicle windshield, including a profile element (10) according to one of claims 1 to 19.

## Revendications

1. Élément profilé (10) pour la liaison d'un composant (80) avec une vitre de véhicule (90), avec un corps profilé (20), qui peut être fixé avec une première portion (40) au niveau d'un bord (92) de la vitre de véhicule (90) et qui présente, dans une deuxième portion (30), pour la fixation amovible du composant (80) sur l'élément profilé (10), un évidement d'encliquetage (50) avec une ouverture d'emboîtement (52), qui s'étend dans la direction longitudinale (L) de l'élément profilé (10) et dans laquelle une nervure (82) du composant (80) peut être fixé par friction et/ou par complémentarité de forme, **caractérisé en ce que**, sur le corps profilé (20), se trouve un élément de fermeture (60, 62, 64) qui, dans une première position de fonctionnement (A), ponte l'ouverture d'emboîtement et obture l'évidement d'encliquetage (50).

2. Élément profilé selon la revendication 1, **caractérisé en ce que** l'élément de fermeture (60, 62, 64) est relié le long de la direction longitudinale (L) de l'élément profilé (10) avec le corps profilé (20), plus particulièrement par l'intermédiaire de zones (61', 62', 65') avec rétrécissements, de préférence l'élément de fermeture (60, 62, 64) étant formé d'une seule pièce avec le corps profilé (20) ou est relié par adhérence de matière avec le corps profilé (20).

3. Élément profilé selon la revendication 1 ou 2, **caractérisé en ce que** l'élément de fermeture (60, 62, 64) obture, dans une première position de fonctionnement (A), l'ouverture d'emboîtement (52) de l'évidement d'encliquetage (50) et la libère dans une deuxième position de fonctionnement (B).

4. Élément profilé selon l'une des revendications 1 à 3, **caractérisé en ce que** l'élément de fermeture (60, 62, 64) est un élément plat dont le plan (E) est orienté globalement perpendiculairement au bord (92) de la vitre de véhicule (90).

5. Élément profilé selon l'une des revendications 1 à 4, **caractérisé en ce que**, entre le corps profilé (20) et l'élément de fermeture (60, 62, 64), se trouve une zone de charnière (61, 63, 65).

6. Élément profilé selon l'une des revendications 1 à 5, **caractérisé en ce que** le corps profilé (20) et l'élément de fermeture (60, 62, 64) sont constitués de matériaux différents.

7. Élément profilé selon l'une des revendications 1 à 6, **caractérisé en ce qu'**un élément de fermeture (60) est prévu, qui est articulé, le long de la direction longitudinale (L) de l'élément profilé (10), sur un premier côté (S1) de l'évidement d'encliquetage (50), avec le corps profilé (20).

8. Élément profilé selon la revendication 7, **caractérisé en ce que** l'élément de fermeture (60) est emboîté, le long de la direction longitudinale (L) de l'élément profilé (10), sur le deuxième côté (S2), se trouvant en face du premier côté (S1), de l'évidement d'encliquetage (50), dans la première position de fonctionnement (A), par friction et/ou par complémentarité de forme avec le corps profilé (20).

9. Élément profilé selon la revendication 7, **caractérisé en ce que** l'élément de fermeture (60) est relié, le long de la direction longitudinale (L) de l'élément profilé (10), sur le deuxième côté (S2), opposé au premier côté (S1), de l'évidement d'encliquetage (50), dans la première position de fonctionnement (A), par l'intermédiaire d'une zone à rétrécissement (62'), avec le corps profilé (20).

10. Élément profilé selon l'une des revendications 1 à 6, **caractérisé en ce que** deux éléments de fermeture (62, 64) sont prévus, un premier élément de fermeture (62) étant articulé sur un premier côté (S1) de l'évidement d'encliquetage (50) et un deuxième élément de fermeture (64) étant articulé, sur le deuxième côté (S2), opposé au premier côté (S1), de l'évidement d'encliquetage (50), le long de la direction longitudinale (L) de l'élément profilé (10), avec le corps profilé (20).

11. Élément profilé selon la revendication 10, **caractérisé en ce que** les éléments de fermeture (62, 64), dans la première position de fonctionnement (A), sont emboîtés entre eux par friction et/ou par complémentarité de forme et/ou sont reliés entre eux par l'intermédiaire d'une zone à rétrécissement (63').

12. Élément profilé selon l'une des revendications 1 à 11, **caractérisé en ce qu'**au moins un élément de fermeture (60, 62, 64) peut être bloqué dans la deuxième position de fonctionnement (B), à l'intérieur de l'évidement d'encliquetage (50).

13. Élément profilé selon l'une des revendications 1 à 12, **caractérisé en ce que** l'élément de fermeture (60, 62, 64) est conçu de façon à ce qu'il forme, dans la deuxième position de fonctionnement (B), un élément d'encliquetage pour la nervure (82) du composant (80).

14. Élément profilé selon l'une des revendications 1 à 13, **caractérisé en ce que** l'élément de fermeture (60, 62, 64) comprend ou supporte au moins un élément d'encliquetage (70) qui peut être emboîté, dans la deuxième position de fonctionnement (B), par friction et/ou par complémentarité de forme, avec la nervure (82) du composant (80).

15. Élément profilé selon l'une des revendications 1 à 14, **caractérisé en ce qu'**un élément d'encliquetage (100) est prévu pour la nervure (82) du composant (80) à l'intérieur de l'évidement d'encliquetage (50).

16. Élément profilé selon la revendication 13 ou 15, **caractérisé en ce que** l'élément d'encliquetage (70) de l'élément de fermeture (60, 62, 64) et/ou l'élément d'encliquetage (100) prévu à l'intérieur de l'évidement d'encliquetage (50) constitue un contre-crochet par rapport à la nervure (82) du composant (80).

17. Élément profilé selon l'une des revendications 1 à 16, **caractérisé en ce que**
- la première portion (40) de l'élément profilé (10) présente une forme de U ou
- la première portion (40) de l'élément profilé (10) présente une forme de L et de préférence la première portion (40) de l'élément profilé (10) comprend un montant profilé (21) qui comporte, au moins sur une partie, une couche adhésive (24).

18. Élément profilé selon l'une des revendications 1 à 17, **caractérisé en ce que** le corps profilé (20) comprend ou supporte une lèvre d'étanchéité (110).

19. Élément profilé selon l'une des revendications 1 à 18, **caractérisé en ce que**, dans le corps profilé (20) et/ou dans l'élément de fermeture (60, 62, 64), est prévu, au moins sur une partie, un insert de rigidification (120).

20. Dispositif d'étanchéité pour la transition entre une vitre de véhicule (90) et un composant (80), plus particulièrement pour la partie inférieure d'un pare-brise de véhicule, avec un élément profilé (10) selon l'une des revendications 1 à 19.
